# EUROPÄISCHE PATENTSCHRIFT

(11) **EP 4 051 579 B1**
(45) Veröffentlichungstag und Bekanntmachung des Hinweises auf die Patenterteilung: **15.11.2023**
(21) Anmeldenummer: 20821136.7
(22) Anmeldetag: 30.11.2020
(51) Int. Cl.: B64C 3/18, B64D 27/24, B64C 39/02

(54) **LEICHTBAUSTRUKTUR FÜR EIN FAHRZEUG UND LUFTFAHRZEUG**
LIGHTWEIGHT STRUCTURE FOR A VEHICLE AND AIRCRAFT
STRUCTURE LÉGÈRE POUR VÉHICULE ET AÉRONEF

(30) Priorität: 05.12.2019 DE 102019218979
(43) Veröffentlichungstag der Anmeldung: 07.09.2022
(73) Patentinhaber: Airbus Operations GmbH, 21129 Hamburg (DE)
(72) Erfinder: LINDE, Peter, 21129 Hamburg (DE); NASIRI, Awista, 21129 Hamburg (DE); HAASE, Gunnar, 21129 Hamburg (DE)
(74) Vertreter: Isarpatent
(86) Internationale Anmeldenummer: PCT/EP2020/083991
(87) Internationale Veröffentlichungsnummer: WO 2021/110610

(56) Entgegenhaltungen:
- EP-A1- 3 544 083
- EP-A2- 1 901 387
- EP-B1- 1 901 387
- DE-A1-102015 202 168
- US-A1- 2018 040 912

## Beschreibung

Die vorliegende Erfindung betrifft eine Leichtbaustruktur für ein Fahrzeug, insbesondere ein Luftfahrzeug, sowie ein Luftfahrzeug.

Im Fahrzeugbau kommen zunehmend elektrische Systeme zum Einsatz. So werden beispielsweise immer häufiger elektrische Antriebe verbaut, um die Emissionen des Fahrzeugs zu verringern. Ferner steigt allgemein die Anzahl elektrisch betriebener Systeme an, z.B. die Anzahl elektrischer Aktuatoren, Sensorsysteme oder dergleichen. Um den Bedarf an elektrischer Energie im Fahrzeug decken zu können, sind leistungsfähige elektrische Energiespeicher wünschenswert, die sich platz- und gewichtssparend ins Fahrzeug integrieren lassen. Dies gilt für Straßenfahrzeuge und im besonderen Maße für Luftfahrzeuge.

Ein Ansatz, diesen Anforderungen gerecht zu werden, liegt darin, die Energiespeichervorrichtung als lasttragendes Teil in eine Struktur des Fahrzeugs zu integrieren. Beispielsweise beschreibt die US 9 520 580 B2 Fahrzeug, bei dem eine Batterie lasttragend in ein Faserverbundbauteil eingebettet ist. In der US 2019/0263498 A1 wird ferner ein Leichtflugzeug beschrieben, bei dem Teile einer Außenhaut von Rumpf oder Flügel als lasttragende Strukturbatterien ausgebildet sind. In der US 8 967 529 B1 wird ferner beschrieben, Batteriezellen in einen hochfesten Behälter aus Faserverbundplatten anzuordnen und die den Behälter in Ausnehmungen, die in Versteifungsrippen eines Flügels des Luftfahrzeugs ausgebildet sind, anzuordnen.

Ferner wird z.B. in der US 8 659 874 B2 Kohlefaserverbundbatterien beschrieben, welche eine Kathodenschicht aus mit Lithiumionen beschichteten Kohlefasern, eine Anodenschicht aus Kohlefasern und eine zwischen der Anodenschicht und der Kathodenschicht angeordneten Separatorschicht aus Glasfasern aufweist, wobei die Kathodenschicht, die Anodenschicht und die Separatorschicht jeweils in ein elektrolytisches Polymermatrixmaterial eingebettet sind.

Die US2018/040912A1 zeigt eine Struktur mit einem Träger und einer Strukturbatterie, umfassend eine Kathodenschicht mit zugeordnetem ersten Kollektor, eine Anodenschicht mit zugeordnetem zweiten Kollektor und einen zwischen diesen Schichten angeordneten Separator. Die Strukturbatterie ist mit einem Zentralsteg des Trägers verbunden.

Die EP3544083A1 offenbart eine Batterie, die als lasttragendes Strukturbauteil eines Luftfahrzeuges dient, so z.B. als Querträger einer Tragfläche.

Die EP1901387A2 beschreibt die Herstellung von Elektrodenstromsammelgruppen.

Die DE102015202168A1 offenbart ein Kraftfahrzeugsystem mit einem Batteriemanagementsystem, einem elektrochemischen Energiespeicher mit mehreren Modulen sowie Schaltelemente, um die Module des Energiespeichers mit dem System zu koppeln.

Es ist eine der Aufgaben der vorliegenden Erfindung, eine elektrische Energiespeichervorrichtung in gewichtsparender und einfach montierbarer Weise in eine Leichtbaustruktur zu integrieren.

Diese Aufgabe wird durch den Gegenstand des unabhängigen Anspruchs 1 gelöst.

Nach einem ersten Aspekt der Erfindung ist eine Leichtbaustruktur für ein Fahrzeug, insbesondere für ein Luftfahrzeug, wie beispielsweise ein Flugzeug vorgesehen. Die Leichtbaustruktur umfasst einen ersten Längsträger mit einem Basissteg, welcher an einer Kontaktoberfläche eine erste Sammelleiterbahn aus einem elektrisch leitfähigen Material aufweist.

Der erste Längsträger kann beispielsweise als Träger mit U-förmigem Querschnitt realisiert sein, wobei zusätzlich zu einem unteren Basissteg ein sich quer zu diesem erstreckender Hauptsteg und ein sich von dem Hauptsteg aus parallel zu dem unteren Basissteg erstreckender oberer Basissteg vorgesehen sind. Der Längsträger kann beispielsweise aus einem Faserverbundmaterial, z.B. einem kohlefaserverstärkten Thermoplastmaterial oder dergleichen, oder einem Metallmaterial, z.B. aus einer Aluminiumlegierung oder dergleichen gebildet sein. Die Sammelleiterbahn erstreckt sich auf einer Kontaktoberfläche des Basisstegs, welche z.B. dem optionalen oberen Basissteg zugewandt sein kann, und ist mit dieser fest verbunden. Z.B. kann die Sammelleiterbahn auf die Kontaktoberfläche aufgeklebt oder auf diese aufgedruckt sein.

Die Leichtbaustruktur weist ferner einen Querträger mit einem Zentralsteg und einem sich quer zu dem Zentralsteg erstreckenden Quersteg auf. Der Quersteg umfasst eine erste Anschlussleiterbahn aus einem elektrisch leitfähigen Material, die sich im Bereich eines ersten Endabschnitts des Querträgers auf einer ersten Oberfläche und einer entgegengesetzt zu dieser orientierten zweiten Oberfläche des Querstegs erstreckt, und eine zweite Anschlussleiterbahn aus einem elektrisch leitfähigen Material, welche sich separat von der ersten Anschlussleiterbahn zumindest auf der ersten Oberfläche des Querstegs erstreckt. Der Querträger erstreckt sich quer zu dem Längsträger und der Quersteg des Querträgers ist am ersten Endabschnitt mit dem Basissteg des ersten Längsträgers derart verbunden, dass die erste Anschlussleiterbahn in Kontakt mit der Sammelleiterbahn des Basisstegs des ersten Längsträgers ist.

Der Querträger kann beispielsweise einen T-förmigen, einen Z-förmigen oder einen H-förmigen Querschnitt aufweisen, welcher durch den Zentralsteg, den Quersteg und optional durch einen weiteren Quersteg definiert ist. Der Querträger kann beispielsweise aus einem Faserverbundmaterial, z.B. einem kohlefaserverstärkten Thermoplastmaterial oder dergleichen, oder einem Metallmaterial, z.B. aus einer Aluminiumlegierung oder dergleichen, gebildet sein. Die erste Anschlussleiterbahn erstreckt sich im ersten Endabschnitt des Querträgers durchgehend auf einer ersten Oberfläche des Querstegs, welche abgewandt von der Kontaktoberfläche des Basisstegs des Längsträgers orientiert ist, und auf einer zweiten Oberfläche des Querstegs, welche der Kontaktoberfläche des Basisstegs des Längsträgers zugewandt orientiert ist. Beispielsweise kann die erste Anschlussleiterbahn auf einer die erste und die zweite Oberfläche verbindenden Kante des Querstegs verlaufen oder durch ein die erste und die zweite Oberfläche verbindendes Durchgangsloch. Die zweite Anschlussleiterbahn verläuft separat oder beabstandet von der ersten Anschlussleiterbahn auf der ersten Oberfläche des Querstegs des Querträgers und kann sich optional auch auf der zweiten Oberfläche des Querstegs erstrecken. Die Anschlussleiterbahnen sind fest mit der ersten und der zweiten Oberfläche des Querstegs verbunden, z.B. indem diese auf die erste und die zweite Oberfläche aufgeklebt oder auf diese aufgedruckt sind. Der Querträger und der erste Längsträger bilden eine T-förmige Verbindung aus, wobei ein Ende des Querträgers mit dem Längsträger mechanisch verbunden ist, z.B. mit diesem verschraubt, vernietet, verklebt, verschweißt oder in ähnlicher Weise verbunden ist. Insbesondere sind der Quersteg des Querträgers und der Basissteg des Längsträgers überlappend angeordnet, wobei die zweite Oberfläche des Querstegs der Kontaktoberfläche des Basisstegs zugewandt ist und die die erste Sammelleiterbahn des Basisstegs in direktem und damit elektrisch leitendem Kontakt mit der ersten Anschlussleiterbahn des Querstegs ist.

Die Leichtbaustruktur weist weiterhin eine Kohlefaserstrukturbatterie auf, insbesondere eine wiederaufladbare Kohlefaserstrukturbatterie. Die Kohlefaserstrukturbatterie umfasst eine Kathodenschicht, einen mit der Kathodenschicht verbundenen ersten Kollektor, eine Anodenschicht, einen mit der Anodenschicht verbundenen zweiten Kollektor und eine zwischen der Anodenschicht und der Kathodenschicht angeordnete Separatorschicht. Die Kohlefaserstrukturbatterie ist flächig mit dem Zentralsteg des Querträgers verbunden. Der erste Kollektor ist elektrisch mit der ersten oder der zweiten Anschlussleiterbahn verbunden und der zweite Kollektor ist elektrisch mit der jeweils anderen Anschlussleiterbahn verbunden. Die Kohlefaserstrukturbatterie ist somit als eine Art Verstärkungsplatte an dem Zentralsteg des Querträgers angebracht und vergrößert damit die mechanische Steifigkeit des Querträgers. Die Kollektoren sind elektrisch leitend mit den auf der ersten Oberfläche vorgesehenen Anschlussleiterbahnen verbunden. Damit kann an den Anschlussleiterbahnen bzw. an der ersten Sammelleiterbahn des Längsträgers und an der zweiten Anschlussleiterbahn eine durch die Batterie bereitgestellte elektrische Spannung abgegriffen werden.

Nach einem zweiten Aspekt der Erfindung ist ein Luftfahrzeug mit einer Leichtbaustruktur nach dem ersten Aspekt der Erfindung vorgesehen. Im Zusammenhang mit einem der Aspekte der Erfindung offenbarte Merkmale und Vorteile gelten auch für den jeweils anderen Aspekt als offenbart.

Eine der Erfindung zugrundeliegende Idee besteht darin, eine Kohlefaserstrukturbatterie fest mit einem Zentralsteg eines Querträgers einer Leichtbaustruktur zu verbinden, die Kollektoren der Batterie mit an einem Quersteg des Querträgers vorgesehenen Leiterbahnen zu kontaktieren und zumindest eine der Leiterbahnen auf eine Rückseite des Querstegs zu führen und diese Leiterbahn in einem Verbindungsbereich des Querträgers mit einem Längsträger mit einer an einem Steg des Längsträgers ausgebildeten Sammelleiterbahn in mechanischen und elektrischen Kontakt zu bringen.

Da die Kohlefaserstrukturbatterie flächig fest mit dem Zentralsteg verbunden ist und die Kohlefaserstrukturbatterie aufgrund ihres Schichtaufbaus mit in ein Matrixmaterial eingebetteten Faserlagen selbst eine hohe mechanische Steifigkeit aufweist, wirkt die Batterie als lasttragendes Bauteil. Dies erlaubt eine Verringerung der Dicke des Zentralstegs und damit eine Verringerung des Gewichts der Leichtbaustruktur bei gleichzeitiger Integration eines elektrischen Energiespeichers.

Ein weiterer Vorteil liegt darin, dass an dem Quersteg des Querträgers Anschlussleiterbahnen vorgesehen sind, mit welchen die Kollektoren der Kohlefaserstrukturbatterie in Kontakt stehen. Damit sind zum elektrischen Anschluss der Batterie Kabel nicht zwangsläufig notwendig, was die Montage der Batterie erleichtert. Da zumindest die erste Anschlussleiterbahn sich auch auf der zweiten Oberfläche des Querstegs erstreckt, die der Kontaktoberfläche des Basisstegs des Längsträgers zugewandt ist, erfolgt bei der Montage des Querträgers an dem Längsträger automatisch eine Kontaktierung zwischen der ersten Anschlussleiterbahn und der ersten Sammelleiterbahn des Längsträgers. Damit wird der Verkabelungsaufwand weiter reduziert und die Montage erleichtert.

Vorteilhafte Ausgestaltungen und Weiterbildungen ergeben sich aus den auf den unabhängigen Anspruch rückbezogenen Unteransprüchen in Verbindung mit der Beschreibung.

Gemäß manchen Ausführungsformen der Leichtbaustruktur kann vorgesehen sein, dass die Kohlefaserstrukturbatterie einen rechteckförmigen Querschnitt aufweist. Beispielsweise kann die Kohlefaserstrukturbatterie in Form einer rechteckförmigen Platte realisiert sein. Damit wird eine hohe Energiedichte bezogen auf das Volumen der Batterie erzielt. Gleichzeitig kann ein hoher Biegewiderstand in Bezug auf eine Biegerichtung erzielt werden.

Gemäß manchen Ausführungsformen kann vorgesehen sein, dass die Kohlefaserstrukturbatterie mit dem Zentralsteg des Querträgers verklebt oder verschweißt ist. Verkleben oder Verschweißen bieten den Vorteil, dass auf einfache Weise ein große Fügefläche zwischen Batterie und Zentralsteg geschaffen und damit die flächenbezogene Belastung der Verbindung verringert werden kann. Damit wird der Kraftfluss zwischen Zentralsteg und Batterie verbessert und somit die mechanische Steifigkeit des Querträgers vorteilhaft beeinflusst.

Gemäß manchen Ausführungsformen kann der Zentralsteg des Querträgers eine Vertiefung aufweisen, in welcher die Kohlefaserstrukturbatterie aufgenommen ist. Beispielsweise kann der Zentralsteg eine Mulde aufweisen, welche einen zum Umfang der Batterie korrespondierenden Umfang aufweist. Die Mulde oder die Vertiefung ist dabei vorzugsweise derart gestaltet, dass eine Oberfläche der Batterie bündig zu einer die Vertiefung umgebenden Seitenfläche des Zentralstegs liegt, wenn die Batterie in der Vertiefung aufgenommen ist. Wenn der Querträger mit einem H-förmigen oder einem U-förmigen Querschnitt realisiert ist, welcher durch den Zentralsteg, einen ersten Quersteg und einen entgegengesetzt zu dem ersten Quersteg gelegenen und sich quer zum Zentralsteg erstreckenden zweiten Quersteg definiert ist, kann die Vertiefung in Bezug auf eine Richtung zwischen dem ersten und dem zweiten Quersteg vorteilhaft eine Breite aufweisen, die kleiner als ein Abstand des ersten und des zweiten Querstegs ist. Dies erleichtert weiter die Montage der Batterie bzw. das Einsetzten der Batterie in die Vertiefung.

Gemäß manchen Ausführungsformen kann die Leichtbaustruktur zumindest eine weitere Kohlefaserstrukturbatterie mit einer Kathodenschicht, einem mit der Kathodenschicht verbundenen ersten Kollektor, einer Anodenschicht, einem mit der Anodenschicht verbundenen zweiten Kollektor und einer zwischen der Anodenschicht und der Kathodenschicht angeordneten Separatorschicht aufweisen, wobei die weitere Kohlefaserstrukturbatterie flächig mit dem Zentralsteg des Querträgers verbunden ist, und wobei der erste Kollektor der weiteren Kohlefaserstrukturbatterie elektrisch mit der zweiten Anschlussleiterbahn verbunden ist und der zweite Kollektor der weiteren Kohlefaserstrukturbatterie elektrisch mit einer weiteren Anschlussleiterbahn aus einem elektrisch leitenden Material verbunden ist, welche zumindest auf der ersten Oberfläche des Querstegs des Querträgers verläuft. Demnach können auf derselben Seite oder auf verschiedenen Seiten des Zentralstegs mehrere Kohlefaserstrukturbatterien angeordnet sein, welche über die zweite Anschlussleiterbahn und gegebenenfalls weitere Anschlussleiterbahnen elektrisch in Reihe oder parallel geschaltet sein können. Über eine weitere Anschlussleiterbahn und kann eine Spannung der Batterien zwischen der ersten Sammelleiterbahn und der Anschlussleiterbahn abgegriffen werden.

Gemäß weiteren Ausführungsformen kann vorgesehen sein, dass der Quersteg über eine erste Seitenfläche des Zentralstegs und über eine entgegengesetzt zu der ersten Seitenfläche gelegene zweite Seitenfläche des Zentralstegs vorsteht, wobei die erste Anschlussleiterbahn sich auf einer durch die erste Seitenfläche des Zentralstegs definierten ersten Seite des Querträgers auf der ersten Oberfläche des Querstegs erstreckt und auf der zweiten Oberfläche des Querstegs endet, wobei die zweite Anschlussleiterbahn sich auf der ersten Seite des Querträgers auf der ersten Oberfläche des Querstegs, auf der zweiten Oberfläche des Querstegs und auf einer durch die zweite Seitenfläche des Zentralstegs definierte zweite Seite des Querträgers auf der ersten Oberfläche des Querstegs erstreckt, wobei der Quersteg zusätzlich eine dritte Anschlussleiterbahn aus einem elektrisch leitenden Material aufweist, welche sich im Bereich des ersten Endabschnitts auf der zweiten Seite des Querträgers auf der ersten Oberfläche des Querstegs erstreckt und auf der zweiten Oberfläche des Querstegs endet, wobei die dritte Anschlussleiterbahn mit einer an der Kontaktoberfläche des Basisstegs vorgesehenen zweiten Sammelleiterbahn aus einem elektrisch leitenden Material in Kontakt ist, wobei eine erste Kohlefaserstrukturbatterie mit der ersten Seitenfläche des Zentralstegs flächig verbunden ist und eine zweite Kohlefaserstrukturbatterie flächig mit der zweiten Seitenfläche des Zentralstegs verbunden ist, und wobei ein erster Kollektor der ersten Kohlefaserstrukturbatterie mit der ersten Anschlussleiterbahn, ein zweiter Kollektor der ersten Kohlefaserstrukturbatterie mit der zweiten Anschlussleiterbahn, ein erster Kollektor der zweiten Kohlefaserstrukturbatterie mit der zweiten Anschlussleiterbahn und ein zweiter Kollektor der zweiten Kohlefaserstrukturbatterie mit der dritten Anschlussleiterbahn elektrisch verbunden ist. Gemäß dieser Ausführungsform wird eine Serienschaltung aus zwei Kohlefaserstrukturbatterien realisiert, welche auf verschiedenen Seiten des Zentralstegs angeordnet sind. Damit ergibt sich ein sehr kompakter Aufbau mit einer in Bezug auf den Zentralsteg symmetrischen Anordnung der Batterien, was in Bezug auf die Steifigkeit des Querträgers vorteilhaft ist. Insbesondere kann die Dicke des Zentralstegs somit von zwei Seiten her verringert werden, wodurch das Gewicht bei gegebener Anzahl an Batterien weiter verringert werden kann. Ein weiterer Vorteil liegt darin, dass sowohl die erste als auch die zweite Sammelleiterbahn an dem Längsträger angeordnet sind, wodurch die von den Batterien bereitgestellte Spannung auf einfache Weise abgegriffen werden kann.

Gemäß weiteren Ausführungsformen kann vorgesehen sein, dass der Quersteg zumindest über eine erste Seitenfläche des Zentralstegs vorsteht, wobei die erste Anschlussleiterbahn sich auf der ersten Oberfläche des Querstegs erstreckt und auf der zweiten Oberfläche des Querstegs endet, wobei die zweite Anschlussleiterbahn sich ausschließlich auf der ersten Oberfläche des Querstegs erstreckt, wobei der Quersteg zusätzlich eine dritte Anschlussleiterbahn aus einem elektrisch leitenden Material aufweist, welche sich zumindest auf der ersten Oberfläche des Querstegs erstreckt, wobei eine erste Kohlefaserstrukturbatterie und eine zweite Kohlefaserstrukturbatteriejeweils mit der ersten Seitenfläche des Zentralstegs flächig verbunden sind, und wobei ein erster Kollektor der ersten Kohlefaserstrukturbatterie mit der ersten Anschlussleiterbahn, ein zweiter Kollektor der ersten Kohlefaserstrukturbatterie mit der zweiten Anschlussleiterbahn, ein erster Kollektor der zweiten Kohlefaserstrukturbatterie mit der zweiten Anschlussleiterbahn und ein zweiter Kollektor der zweiten Kohlefaserstrukturbatterie mit der dritten Anschlussleiterbahn elektrisch verbunden ist. Damit wird eine Reihenschaltung von zumindest zwei Batterien realisiert, die auf derselben Seite des Zentralstegs angeordnet sind. Dies ist insbesondere vorteilhaft, wenn der Bauraum auf der anderen Seite des Zentralstegs begrenzt ist oder viele Batterien in Reihe geschaltet werden sollen. Selbstverständlich können zusätzlich auch auf der Rückseite bzw. der zweiten Seite des Zentralstegs Kohlefaserstrukturbatterien angeordnet sein, welche mit den auf der ersten Seite angeordneten Batterien über eine sich auf der ersten Seite des Querträgers auf der ersten Oberfläche, eine sich auf der zweiten Oberfläche und auf einer zweiten Seite des Querträgers auf der ersten Oberfläche erstreckende Anschlussleiterbahn in Reihe geschaltet sein können. Auch können die Batterien auf den verschiedenen Seiten des Zentralstegs parallel zueinander geschalten sein.

Gemäß weiteren Ausführungsformen kann vorgesehen sein, dass die dritte Anschlussleiterbahn sich zusätzlich auf der zweiten Oberfläche des Querstegs erstreckt und im Bereich des ersten Endabschnitts des Querträgers auf der zweiten Oberfläche des Querstegs endet, und wobei die dritte Anschlussleiterbahn mit einer an der Kontaktoberfläche des Basisstegs vorgesehenen, von der ersten Sammelleiterbahn elektrisch isolierten zweiten Sammelleiterbahn aus einem elektrisch leitenden Material in Kontakt ist. Demnach kann auf platzsparende Weise eine Reihenschaltung aus zwei Kohlefaserstrukturbatterien realisiert werden.

Gemäß weiteren Ausführungsformen kann auch vorgesehen sein, dass der Quersteg über die erste Seitenfläche des Zentralstegs und über eine entgegengesetzt zu der ersten Seitenfläche gelegene zweite Seitenfläche des Zentralstegs vorsteht, wobei die dritte Anschlussleiterbahn sich auf einer durch die erste Seitenfläche des Zentralstegs definierten ersten Seite des Querträgers auf der ersten Oberfläche des Querstegs, auf der zweiten Oberfläche des Querstegs und auf einer durch die zweite Seitenfläche des Zentralstegs definierten zweiten Seite des Querträgers auf der ersten Oberfläche des Querstegs erstreckt. Demnach wird die dritte Anschlussleiterbahn auf die zweite Seite des Querträgers geführt, wo weitere Kohlefaserstrukturbatterien angeordnet und anschlossen werden können. Somit kann die Packungsdichte an Batterien je Querträger vorteilhaft erhöht werden.

Gemäß anderen Ausführungsformen kann die Leichtbaustruktur eine weitere Kohlefaserstrukturbatterie mit einer Kathodenschicht, einem mit der Kathodenschicht verbundenen ersten Kollektor, einer Anodenschicht, einem mit der Anodenschicht verbundenen zweiten Kollektor und einer zwischen der Anodenschicht und der Kathodenschicht angeordneten Separatorschicht aufweisen, wobei die weitere Kohlefaserstrukturbatterie flächig mit dem Zentralsteg des Querträgers verbunden ist. Beispielsweise kann eine erste Kohlefaserstrukturbatterie mit einer ersten Seitenfläche des Zentralstegs und eine zweite Kohlefaserstrukturbatterie mit einer entgegengesetzt zu der ersten Seitenfläche gelegenen zweiten Seitenfläche des Zentralstegs verbunden sein. Die zweite Anschlussleiterbahn erstreckt sich hierbei zusätzlich auf der zweiten Oberfläche des Querstegs erstreckt, ende im Bereich des ersten Endabschnitts des Querträgers auf der zweiten Oberfläche des Querstegs und ist mit einer an der Kontaktoberfläche des Basisstegs vorgesehenen, von der ersten Sammelleiterbahn elektrisch isolierten zweiten Sammelleiterbahn aus einem elektrisch leitenden Material in Kontakt. Der Quersteg des Querträgers weist ferner eine dritte Anschlussleiterbahn aus einem elektrisch leitenden Material auf, welche sich im ersten Endabschnitt auf der ersten Oberfläche des Querstegs erstreckt, auf der zweiten Oberfläche des Querstegs endet und mit der ersten Sammelleiterbahn in Kontakt ist. Weiterhin weist der Quersteg des Querträgers eine vierte Anschlussleiterbahn aus einem elektrisch leitenden Material auf, welche sich beabstandet von der dritten Anschlussleiterbahn auf der ersten Oberfläche des Querstegs erstreckt, im Bereich des ersten Endabschnitts des Querträgers auf der zweiten Oberfläche des Querstegs endet und mit der zweiten Sammelleiterbahn in Kontakt ist, wobei der erste Kollektor der weiteren Kohlefaserstrukturbatterie elektrisch mit einer dritten Anschlussleiterbahn elektrisch verbunden ist und der zweite Kollektor der weiteren Kohlefaserstrukturbatterie elektrisch mit der vierten Anschlussleiterbahn elektrisch verbunden ist. Demnach wird vorteilhaft eine Parallelschaltung von zwei Kohlefaserstrukturbatterien realisiert.

Gemäß manchen Ausführungsformen kann die Leichtbaustruktur einen zweiten Längsträger aufweisen, welcher sich beabstandet zu und entlang des ersten Längsträgers erstreckt, wobei der Querträger mit einem entgegengesetzt zu dem ersten Endabschnitt gelegenen zweiten Endabschnitt mit dem zweiten Längsträger verbunden ist.

Gemäß manchen Ausführungsformen kann vorgesehen sein, dass der Querträger einen weiteren, sich quer zu dem Zentralsteg erstreckenden Quersteg aufweist, wobei die Querstege an entgegengesetzten Enden des Zentralstegs angeordnet sind, so dass der Zentralsteg und die Querstege einen H-förmigen, einen Z-förmigen oder einen U-förmigen Querschnitt des Querträgers definieren.

Gemäß manchen Ausführungsformen des Luftfahrzeugs kann vorgesehen sein, dass der erste Längsträger sich in einer Flügellängsrichtung eines Flügels des Luftfahrzeugs erstreckt und einen ersten Flügellängsholm bildet, und wobei der Querträger sich in einer Flügeltiefenrichtung erstreckt und eine Rippe des Flügels bildet. Optional ist eine Außenhaut an der Rippe und/oder dem Flügellängsholm befestigt.

Hierin wird unter einer Kohlefaserstrukturbatterie eine elektrochemische Zelle verstanden, welche zumindest eine Kathodenschicht mit zumindest einer Lage aus mit Lithiumionen beschichteten Kohlefasern, zumindest eine Anodenschicht mit zumindest einer Lage aus Kohlefasern und zumindest zwischen jeweils einer Anodenschicht und einer Kathodenschicht angeordnete Separatorschicht mit zumindest einer Lage aus elektrisch isolierenden Fasern aufweist, wobei die Kathodenschicht, die Anodenschicht und die Separatorschicht jeweils in ein elektrolytisches Polymermatrixmaterial, vorzugsweise in dasselbe Polymermatrixmaterial eingebettet sind. Die Lithiumionen-Beschichtung kann insbesondere ein Lithium-Metalloxid oder Phosphat sein, z.B. LiFePO₄ oder LiMnOz. Die elektrisch isolierenden Fasern können beispielsweise Glasfasern sein. Das elektrolytische Polymermatrixmaterial kann insbesondere ein Thermosetmaterial, beispielsweise ein Epoxidmaterial sein.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Ansicht eines Luftfahrzeugs gemäß einem Ausführungsbeispiel der Erfindung;
- Fig. 2: eine abgebrochene Schnittansicht eines Flügels des Luftfahrzeugs, die sich bei einem Schnitt entlang der in Fig. 1 gezeigten Linie A-A ergibt, wobei der Flügel eine Leichtbaustruktur gemäß einem Ausführungsbeispiel der Erfindung aufweist;
- Fig. 3: eine perspektivische Ansicht einer Leichtbaustruktur gemäß einem Ausführungsbeispiel der Erfindung in einer schematischen Darstellung;
- Fig. 4: eine perspektivische Ansicht eines Querträgers der in Fig. 3 gezeigten Leichtbaustruktur;
- Fig. 5: eine perspektivische Ansicht eines Längsträgers der in Fig. 3 gezeigten Leichtbaustruktur;
- Fig. 6: eine schematische Schnittansicht einer Kohlefaserstrukturbatterie einer Leichtbaustruktur gemäß einem Ausführungsbeispiel der Erfindung;
- Fig. 7: eine Draufsicht auf eine Leichtbaustruktur gemäß einem weiteren Ausführungsbeispiel der Erfindung;
- Fig. 8: eine Draufsicht auf eine Leichtbaustruktur gemäß einem weiteren Ausführungsbeispiel der Erfindung; und
- Fig. 9: eine Draufsicht auf eine Leichtbaustruktur gemäß einem weiteren Ausführungsbeispiel der Erfindung.

In den Figuren bezeichnen dieselben Bezugszeichen gleiche oder funktionsgleiche Komponenten, soweit nichts Gegenteiliges angegeben ist.

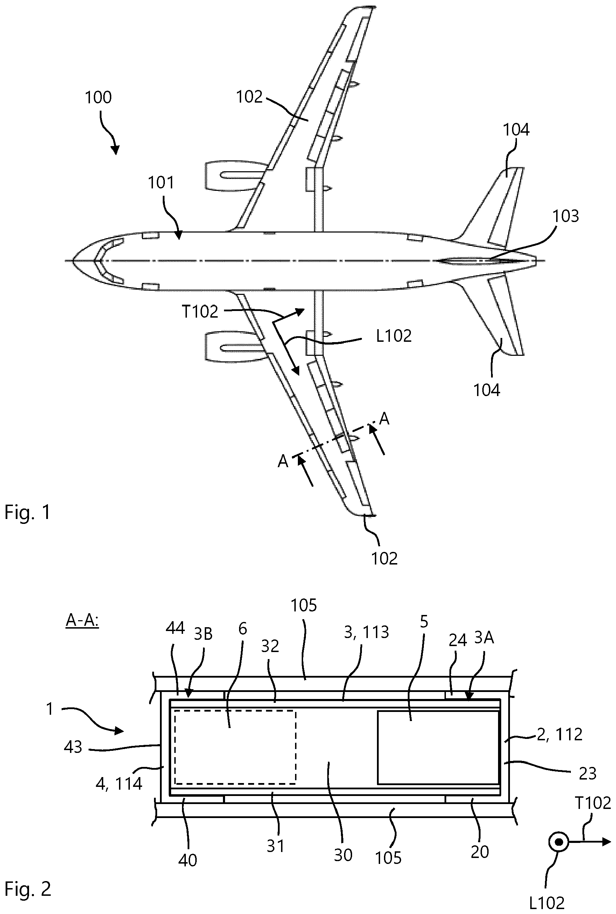

Fig. 1 zeigt beispielhaft ein Luftfahrzeug 100, welches einen Rumpf 101, seitlich von dem Rumpf 101 abstehende Flügel 102 sowie ein Seitenleitwerk 103 und ein Höhenleitwerk 104 aufweist, welche in einem Endbereich des Rumpfs 101 angeordnet sind. Die Flügel 102 erstrecken sich einer Flügellängsrichtung L102 von dem Rumpf 101 aus und weisen eine flächige Erstreckung in einer Flügeltiefenrichtung T102 auf.

Fig. 2 zeigt beispielhaft eine Schnittansicht des Flügels 101. Wie in Fig. 2 beispielhaft dargestellt, kann der Flügel 101 eine Leichtbaustruktur 1 mit einem ersten Längsträger 2, einem zweiten Längsträger 4, einem Querträger 3 und zumindest einer Kohlefaserstrukturbatterie 5, 6 aufweisen. Die Längsträger 2, 4 erstrecken sich jeweils entlang der Flügellängsrichtung L102 erstrecken und sind in der Flügeltiefenrichtung T102 beabstandet zueinander angeordnet. Der Querträger 3 erstreckt sich entlang der Flügeltiefenrichtung T102 zwischen den Längsträgern 2, 4 und ist mechanisch mit diesen verbunden, z.B. mit diesen verklebt, verschweißt, vernietet, verschraubt oder in ähnlicher Weise mit diesen verbunden. Wie in Fig. 2 beispielhaft gezeigt, kann eine Außenhaut 105 des Flügels 102 beispielsweise mit den Längsträgern 2, 4 verbunden sein. In der in Fig. 2 beispielhaft gezeigten Leichtstruktur 1 bilden die Längsträger 2, 4jeweils Flügellängsholme 112, 114 und der Querträger 3 bildet eine Rippe 113.

Wie in Fig. 2 beispielhaft und lediglich schematisch dargestellt, können eine oder mehrere Kohlefaserstrukturbatterien 5, 6 an dem Querträger 2 angeordnet bzw. an diesem befestigt sein. In Fig. 2 ist beispielhaft dargestellt, dass eine erste und eine zweite Kohlefaserstrukturbatterie 5, 6 an einem Zentralsteg 30 des Querträgers 2 angebracht sind. Selbstverständlich können auch mehr oder weniger als zwei Kohlefaserstrukturbatterien 5, 6 vorgesehen sein. Die Leichtbaustruktur 1 wird nachfolgend im Detail erläutert. Selbstverständlich ist die Leichtbaustruktur 1 nicht auf die Verwendung im Flügel 102 eines Luftfahrzeugs 100 beschränkt. Beispielsweise kann die Leichtbaustruktur 1 auch im Rumpf 101 des Luftfahrzeugs 100 oder in anderen Fahrzeugen, wie z.B. in der Karosserie eines Straßenfahrzeugs verbaut sein.

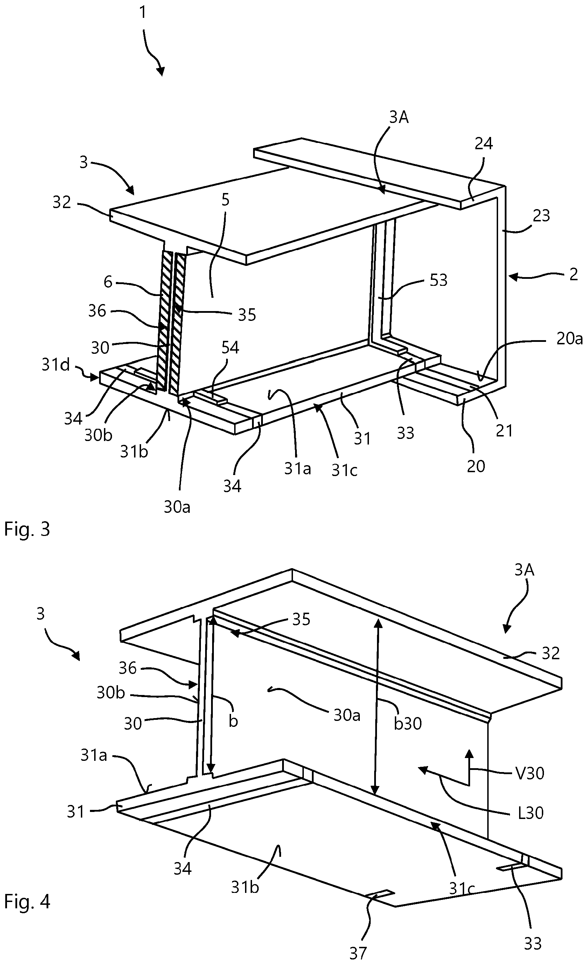

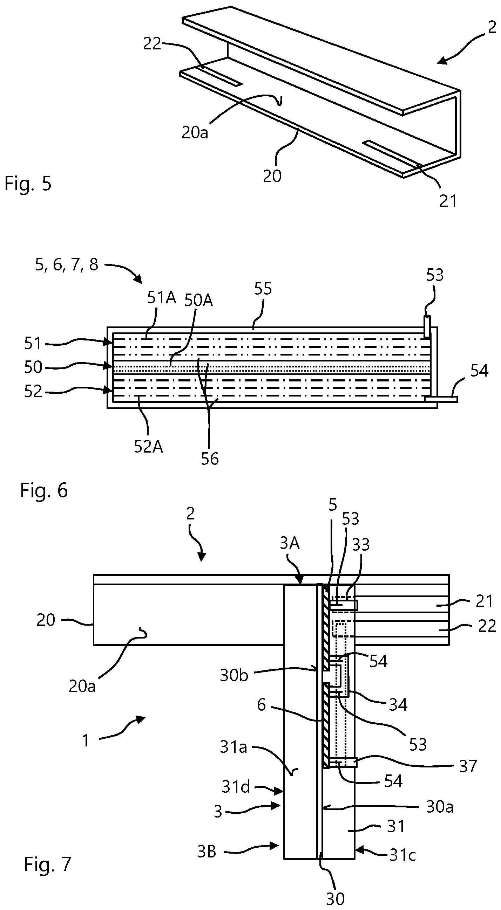

Fig. 3 zeigt eine Leichtbaustruktur 1 mit einem Längsträger 2, einem Querträger 3, einer ersten Kohlefaserstrukturbatterie 5 und einer optionalen zweiten Kohlefaserstrukturbatterie 6. Fig. 4 zeigt beispielhaft eine perspektivische Ansicht des Querträgers 3. Fig. 5 zeigt beispielhaft eine perspektivische Ansicht des Längsträgers 2. Fig. 6 zeigt beispielhaft und rein schematisch eine Schnittansicht einer Kohlefaserstrukturbatterie 5.

Wie in den Fign. 3 und 5 beispielhaft dargestellt ist, kann der Längsträger 2 beispielsweise mit U-förmigem Querschnitt realisiert sein. Allgemein weist der Längsträger 2 zumindest einen ersten oder unteren Basissteg 20 auf. Optional kann der Längsträger 2 zusätzlich einen sich quer zu dem unteren Basissteg 20 erstreckenden Hauptsteg 23 und einen sich von dem Hauptsteg 23 aus parallel zu dem unteren Basissteg 20 erstreckenden ebenfalls optionalen zweiten, oberen Basissteg 24 aufweisen. Selbstverständlich sind auch andere Querschnittsformen denkbar, z.B. ein durch den ersten Basissteg 20 und den Hauptsteg 23 definierter L-förmiger Querschnitt oder ein durch den ersten Basissteg 20, den Hauptsteg 23 und den zweiten Basissteg 24 definierter Z-förmiger Querschnitt. Der Längsträger 2 kann beispielsweise aus einem Faserverbundmaterial, z.B. einem kohlefaserverstärkten Thermoplastmaterial, oder einem Metallmaterial, wie z.B. einer Aluminiumlegierung gebildet sein. Der in Fig. 2 beispielhaft gezeigte, optionale zweite Längsträger 4 kann allgemein in gleicher Weise aufgebaut sein, wie der erste Längsträger 2, also mit einem Basissteg 40, einem optionalen Hauptsteg 43 und einem ebenfalls optionalen zweiten Basissteg 44.

Wie insbesondere in Fig. 5 erkennbar, weist der Längsträger an einer Kontaktoberfläche 20a des Basisstegs 20 eine erste Sammelleiterbahn 21 aus einem elektrisch leitfähigen Material auf. Die erste Sammelleiterbahn 21 kann insbesondere entlang des Basisstegs 20 bzw. entlang einer Längserstreckung des Basisstegs 20 verlaufen. Optional kann zusätzlich eine zweite Sammelleiterban 22 an der Kontaktoberfläche 20a des Basisstegs 20 ausgebildet sein, welche elektrisch von der ersten Sammelleiterbahn 21 isoliert ist. Wie in Fig. 5 beispielhaft gezeigt, kann die zweite Sammelleiterbahn 22 entlang der Längserstreckung des Basisstegs 20 beabstandet von der ersten Sammelleiterbahn 22 angeordnet sein. Die Sammelleiterbahnen 21, 22 können beispielsweise mit der Kontaktoberfläche 20a verklebt sein oder auf diese aufgedruckt sein, z.B. durch ein 3D-Druckverfahren.

Wie in den Fign. 3 und 4 dargestellt ist, weist der Querträger 3 einen Zentralsteg 30 und einen sich quer zu diesem erstreckenden ersten Quersteg 31 auf, wobei der erste Quersteg 31 an einem ersten, unteren Ende des Zentralstegs 30 angeordnet ist. Optional kann der Querträger 3 zusätzlich einen zweiten Quersteg 32 aufweisen, der an einem zweiten, oberen Ende des Zentralstegs 30 angeordnet ist. Wie in den Fign. 3 und 4 beispielhaft gezeigt, kann vorgesehen sein, dass der erste Quersteg 31 sowohl über eine erste Seitenfläche 30a des Zentralstegs 30 als auch über eine entgegengesetzt zu der ersten Seitenfläche 30a gelegenen zweiten Seitenfläche 30b des Zentralstegs 30 vorsteht. In ähnlicher Weise kann auch der optionale zweite Quersteg 32 sowohl über die erste Seitenfläche 30a als auch über die zweite Seitenfläche 30b des Zentralstegs 30 vorstehen. Somit können der Zentralsteg 30 und die Querstege 31, 32 beispielsweise ein H-förmiger Querschnitt des Querträgers 3 definieren, wie dies in den Fign. 3 und 4 beispielhaft gezeigt ist. Der Querträger 3 kann jedoch auch eine andere Querschnittsform aufweisen, z.B. einen durch den ersten Quersteg 31 und den Zentralsteg 30 definierten L- oder T-förmige Querschnitt oder einen durch den Zentralsteg 30, den ersten und den optionalen zweiten Quersteg 31, 32 definierten Z-förmigen Querschnitt. Die erste Seitenfläche 30a des Zentralstegs 30 definiert eine erste Seite des Querträgers 3. Die zweite Seitenfläche 30b des Zentralstegs 30 definiert eine zweite Seite des Querträgers 3. Der Zentralsteg 30 und die Querstege 31, 32 erstrecken sich in einer Querträgerlängsrichtung L30 zwischen einem ersten Endabschnitt 3A und einem entgegengesetzt gelegenen zweiten Endabschnitt 3B. In der in Fig. 2 beispielhaft gezeigten Leichtbaustruktur 1 ist der erste Endabschnitt 3A des Querträgers 3 mit dem ersten Längsträger 2 und der zweite Endabschnitt 3B des Querträgers 3 mit dem zweiten Längsträger 4 verbunden.

Wie insbesondere in Fig. 4 erkennbar ist, kann der Querträger 3 eine optionale Vertiefung 35 aufweisen, welche durch die erste Seitenfläche 30a des Zentralstegs 30 definiert ist. Wie in Fig. 4 beispielhaft gezeigt ist, kann die Vertiefung in Bezug auf eine sich vom ersten Quersteg 31 aus entlang des Zentralstegs 30 erstreckende Vertikalrichtung V30 eine Breite b aufweisen, welche kleiner ist, als eine Breite b30 des Zentralstegs 30. Die Breite b30 des Zentralstegs 30 entspricht im Beispiel der Fign. 3 und 4 einem Abstand zwischen dem ersten und dem zweiten Quersteg 31, 32. Weiterhin optional kann auch an der zweiten Seitenfläche 30b des Zentralstegs 30 eine Vertiefung 36 ausgebildet sein, welche in gleicher Weise realisiert ist wie die Vertiefung 35 an der ersten Seitenfläche 30a.

Der Querträger 3 kann beispielsweise aus einem Faserverbundmaterial, z.B. einem kohlefaserverstärkten Thermoplastmaterial, oder einem Metallmaterial, wie z.B. einer Aluminiumlegierung gebildet sein.

Wie in den Fign. 3 und 4 dargestellt ist, weist der erste Quersteg 31 des Querträgers 3 eine erste Anschlussleiterbahn 33 und eine zweite Anschlussleiterbahn 34, die jeweils aus einem elektrisch leitfähigen Material gebildet sind, auf.

Optional kann außerdem zumindest eine weitere Anschlussleiterbahn, z.B. eine dritte Anschlussleiterbahn 37 aus einem elektrisch leitfähigen Material an dem ersten Quersteg 31 vorgesehen sein. Die Anschlussleiterbahnen 33, 34, 37 sind jeweils fest mit dem Quersteg 31 verbunden, z.B. mit diesem verklebt oder auf diesen aufgedruckt, beispielsweise in einem 3D-Druckverfahren.

Wie in den Fign. 3 und 4 gezeigt ist, ist die erste Anschlussleiterbahn 33, 34 im Bereich des ersten Endabschnitts 3A des Querträgers 3 angeordnet. Ferner erstreckt sich die erste Anschlussleiterbahn 33 auf der ersten Seite des Querträgers 3 auf der ersten Oberfläche 31a des Querstegs 31 und auf der zweiten Oberfläche 31b des Querstegs 31 und endet dort, wie dies in den Fign. 3 und 4 dargestellt ist. Wie in den Fign. 3 und 4 beispielhaft gezeigt, kann insbesondere vorgesehen sein, dass die erste Anschlussleiterbahn 33 auf der ersten Seite des Querträgers 3 auf der ersten Oberfläche 31a des Querstegs 31, auf einer die erste und die zweite Oberfläche 31a, 31b verbindende erste Kante 31c und auf der zweiten Oberfläche 31b ununterbrochen verläuft und auf der zweiten Oberfläche 31b des Querstegs 31 endet, optional auf der ersten Seite des Querträgers 3. Allgemein erstreckt sich die erste Anschlussleiterbahn im Bereich eines ersten Endabschnitts 3A des Querträgers 3 auf der ersten Oberfläche 31a und der zweiten Oberfläche 31b des Querstegs 31.

Die zweite Anschlussleiterbahn 34 ist elektrisch von der ersten Anschlussleiterbahn 33 isoliert bzw. separat von dieser an dem Quersteg 31 ausgebildet. Insbesondere ist die zweite Anschlussleiterbahn 34 entlang der Querträgerlängsrichtung L30 von der ersten Anschlussleiterbahn beabstandet angeordnet, wie dies in den Fign. 3 und 4 beispielhaft dargestellt ist. Die zweite Anschlussleiterbahn 34 die sich auf der ersten Seite des Querträgers 3 auf der ersten Oberfläche 31a des Querstegs 31 erstreckt, kann sich beispielsweise außerdem auf der ersten Kante 31c, auf der zweiten Oberfläche 31b des Querstegs 31, auf einer die erste und die zweite Oberfläche 31a, 31b auf der zweiten Seite verbindenden zweite Kante 31d und auf der zweite Seite des Querträgers 3 auf der ersten Oberfläche 31a des Querstegs 31 ununterbrochen erstrecken, wie dies in den Fign. 3 und 4 beispielhaft dargestellt ist. Es ist jedoch auch möglich, dass sich die zweite Anschlussleiterbahn 34 ausschließlich auf der ersten Oberfläche 31a des Querstegs 31 erstreckt, z.B. mit einem U-förmigen Verlauf, wie dies in Fig. 7 beispielhaft dargestellt und nachfolgend noch im Detail erläutert wird. Allgemein erstreckt sich die zweite Leiterbahn zumindest auf der ersten Oberfläche 31a des Querstegs 31.

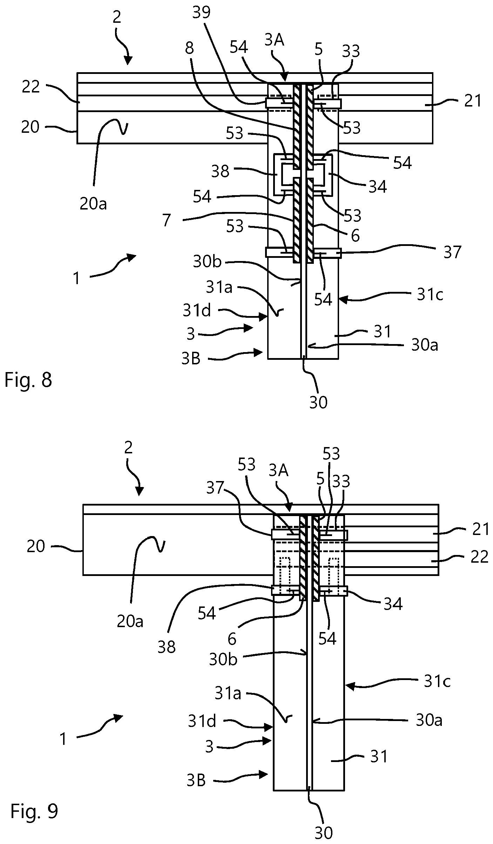

Die optionale dritte Anschlussleiterbahn 37 kann sich beispielsweise im Bereich des ersten Endabschnitts 3A auf der zweiten Seite des Querträgers 3 auf der ersten Oberfläche 31a des Querstegs 31, auf der zweiten Kante 31d und auf der zweiten Oberfläche 31b des Querstegs 31 erstrecken und dort enden, optional auf der zweiten Seite des Querträgers 3, wie dies in Fig. 4 beispielhaft dargestellt ist. Beispielsweise kann die dritte Anschlussleiterbahn 37 in Bezug auf den Zentralsteg 30 des Querträgers 3 spiegelsymmetrisch zu der ersten Anschlussleiterbahn 33 verlaufen. Es jedoch auch denkbar, dass die dritte Anschlussleiterbahn 37 auf der ersten Seite des Querträgers 3 auf der ersten Oberfläche 31a, der ersten Kante 31c und der zweiten Oberfläche 31b des Querstegs 31 verläuft und im Bereich des ersten Endabschnitts 3A des Querträgers 3 auf der zweiten Oberfläche 31b endet, wie dies in Fig. 7 beispielhaft dargestellt ist. Weiterhin ist denkbar, dass die dritte Anschlussleiterbahn 37 sich auf der ersten Seite des Querträgers 3 auf der ersten Oberfläche 31a des Querstegs 31, auf der ersten Kante 31c, auf der zweiten Oberfläche 31b des Querstegs 31, auf einer die erste und die zweite Oberfläche 31a, 31b auf der zweiten Seite verbindende zweite Kante 31d und auf der zweite Seite des Querträgers 3 auf der ersten Oberfläche 31a des Querstegs 31 ununterbrochen erstreckt, wie dies in Fig. 8 beispielhaft dargestellt ist. Allgemein erstreckt sich die dritte Anschlussleiterbahn 37 zumindest auf der ersten Oberfläche 31a des Querstegs 31 des Querträgers 3.

Wie in Fig. 3 dargestellt und bereits anhand von Fig. 2 erläutert, erstreckt sich der Querträger 3 quer zum Längsträger 2. Der Quersteg 31 des Querträgers 3 überlappt im Bereich des ersten Endabschnitts 3A des Querträgers 3 den Basissteg 20 des Längsträgers 2, wobei die zweite Oberfläche 31a des Querträgers 3 der Kontaktfläche 20a des Basisstegs 20 zugewandt ist, wie dies in Fig. 3 beispielhaft dargestellt ist. Der Querträger 3 kann beispielsweise auf Stoß mit dem optionalen Hauptträger 23 des Längsträgers 2 angeordnet sein. Ferner sind der Querträger 3 und der Längsträger 2 im Bereich des ersten Endabschnitts 3A des Querträgers 3 aneinander befestigt bzw. miteinander verbunden, z.B. verschraubt, vernietet, verklebt, verschweißt oder dergleichen. Der

Querträger 3 und der Längsträger 2 sind relativ zueinander derart positioniert, dass die erste Anschlussleiterbahn 33 des Querträgers 3 mit ihrem an der zweiten Oberfläche 31a des Querstegs 31 vorgesehenen Abschnitt in Kontakt mit der ersten Sammelleiterbahn 21 des Basisstegs 20 des ersten Längsträgers 2 ist. Somit berühren sich die erste Sammelleiterbahn 21 und die erste Anschlussleiterbahn 33 und bilden so einen elektrisch leitenden Kontakt aus. Bei der in Fig. 3 beispielhaft dargestellten Leichtbaustruktur 3 sind der Querträger 3 und der Längsträger 2 relativ zueinander ferner derart positioniert, dass die dritte Anschlussleiterbahn 37 mit ihrem mit an der zweiten Oberfläche 31a des Querstegs 31 vorgesehenen Abschnitt in Kontakt mit der zweiten Sammelleiterbahn 22 ist und mit dieser damit einen elektrischen Kontakt ausbildet.

Wie in Fig. 3 beispielhaft dargestellt, kann eine erste Kohlefaserstrukturbatterie 5 an der ersten Seitenfläche 30a des Zentralstegs 30 des Querträgers 3 und eine optionale zweite Kohlefaserstrukturbatterie 6 an der zweiten Seitenfläche 30a des Zentralstegs 30 des Querträgers 3 angeordnet sein. Wie Kohlefaserstrukturbatterien 5, 6 sind jeweils flächig mit dem Zentralsteg 30 verbunden, z.B. mit der jeweiligen Seitenfläche 30a, 30b verklebt oder verschweißt. Wie in Fig. 3 rein schematisch dargestellt ist, können die Kohlefaserstrukturbatterie 5, 6 in der jeweiligen optionalen Vertiefung 34, 35, die an den Seitenfläche 30a, 30b ausgebildet sind, aufgenommen sein. Die Kohlefaserstrukturbatterien 5, 6 können beispielsweise einen rechteckförmigen Querschnitt aufweisen, wie dies in Fig. 3 beispielhaft gezeigt ist. Die optionalen Vertiefung 34, 35 sind vorzugsweise korrespondierend zum Außenumfang der Kohlefaserstrukturbatterien 5, 6 gestaltet.

Fig. 6 zeigt rein schematisch eine Schnittansicht einer Kohlefaserstrukturbatterie 5. Wie in Fig. 6 dargestellt ist, weist die Kohlefaserstrukturbatterie 5 eine Kathodenschicht 51, eine Anodenschicht 52, eine Separatorschicht 50, einen ersten Kollektor 53 und einen zweiten Kollektor 54 auf und kann ferner eine optionale Hülle 55 aufweisen.

Wie in Fig. 6 rein symbolisch durch Doppelstrichpunktlinien dargestellt ist, umfasst die Kathodenschicht 51 zumindest eine, vorzugsweise mehrere Lagen aus mit Lithiumionen beschichteten Kohlefasern 51A. Die Lithiumionen-Beschichtung der Kohlefasern 51A kann insbesondere ein Lithium-Metalloxid oder Phosphat sein, z.B. LiFePO4 oder LiMnO2. Die Anodenschicht 52 weist eine oder mehrere Lagen aus Kohlefasern 52A auf, welche in Fig. 6 rein symbolisch als Strichpunktlinien dargestellt sind. Die Separatorschicht 50 ist zwischen der Anodenschicht 52 und einer Kathodenschicht 51 angeordnet und weist eine oder mehrere Lagen aus elektrisch isolierenden Fasern, wie z.B. Glasfasern auf, welche in Fig. 6 symbolisch durch gepunktete Linien dargestellt sind. Die Kathodenschicht 51, die Anodenschicht 52 und die Separatorschicht 50 sind jeweils in ein elektrolytisches Polymermatrixmaterial 56, vorzugsweise in dasselbe Polymermatrixmaterial eingebettet. Das elektrolytische Polymermatrixmaterial kann insbesondere ein Thermosetmaterial, beispielsweise ein Epoxidmaterial sein. Wie Fig. 6 beispielhaft dargestellt, können die Kathodenschicht 51, die Anodenschicht 52 und die Separatorschicht 50 in der Hülle 55 eingekapselt sein, welche beispielsweise als eine mit einem thermoplastischen Kunststoffmaterial beschichtete Metallfolie realisiert sein kann. Der erste Kollektor 53 ist elektrisch leitend mit der Kathodenschicht 51 verbunden und kann sich gegebenenfalls durch die optionale Hülle 55 hindurch erstrecken. Der zweite Kollektor 54 ist elektrisch leitend mit der Anodenschicht 52 verbunden und kann sich gegebenenfalls durch die optionale Hülle 55 hindurch erstrecken.

Der beispielhaft anhand von Fig. 6 erläuterte Aufbau der ersten Kohlefaserstrukturbatterie 5 gilt auch für alle weiteren hierin beschriebenen Kohlefaserstrukturbatterien 6, 7, 8. Da die Kohlefaserstrukturbatterien 5, 6, 7, 8 aufgrund des Lagenaufbaus mit Kohlefasern 51A, 52A, die in das Polymermatrixmaterial 55 eingebettet sind, weisen diese eine hohe mechanische Steifigkeit und Belastbarkeit auf. Aufgrund der flächigen Verbindung mit der ersten Seitenfläche 31a oder der zweiten Seitenfläche 31b des Zentralstegs 30 des Querträgers 3 wird die mechanische Steifigkeit des Querträgers 3 durch die Batterien 5, 6, 7, 8 vergrößert bzw. kann eine Dicke und damit das Gewicht des Zentralstegs 30 bei gegebener Steifigkeitsanforderung verringert werden.

Wie in Fig. 3 beispielhaft erkennbar, ist der erste Kollektor 53 in mechanischem Kontakt mit der ersten Anschlussleiterbahn 34 und damit elektrisch mit der ersten Anschlussleiterbahn 33 verbunden. Alternativ kann auch der zweite Kollektor 54 mit in mechanischem Kontakt mit der ersten Anschlussleiterbahn 34 und damit elektrisch mit der ersten Anschlussleiterbahn 33 verbunden sein. Der zweite Kollektor 54 ist in mechanischem Kontakt mit der jeweils anderen Anschlussleiterbahn 34, 33 und dadurch mit dieser elektrisch verbunden. In der in Fig. 3 beispielhaft gezeigten Leichtbaustruktur 1 ist der zweite Kollektor 54 mit der zweiten Anschlussleiterbahn 34 elektrisch verbunden.

Bei der in Fig. 3 beispielhaft gezeigten Leichtbaustruktur 1 sind die erste Kohlefaserstrukturbatterie 5 und die optionale zweite Kohlefaserstrukturbatterie 6 elektrisch in Reihe geschalten. Hierzu ist die ein erster Kollektor 53 der zweiten Kohlefaserstrukturbatterie 6 auf der zweiten Seite des Querträgers 3 auf der ersten Oberfläche 31a des Querstegs 31 in Kontakt mit der zweiten Anschlussleiterbahn 34 und damit mit dieser elektrisch verbunden. Ein zweiter Kollektor 54 der zweiten Kohlefaserstrukturbatterie 6 ist mit dem auf der ersten Oberfläche 31a des Querstegs 31 verlaufenden Abschnitt der dritten Anschlussleiterbahn 37 in Kontakt und damit mit der dritten Anschlussleiterbahn 37 elektrisch verbunden. An den Sammelleiterbahnen 21, 22 kann somit eine durch die Kohlefaserstrukturbatterien 5, 6 bereitgestellte elektrische Spannung abgegriffen werden.

In Fig. 3 ist beispielhaft eine Leichtbaustruktur 1 gezeigt, bei der an der ersten Seitenfläche 30a des Zentralstegs 30 des Querträgers 3 und eine optionale zweite Kohlefaserstrukturbatterie 6 an der zweiten Seitenfläche 30a des Zentralstegs 30 des Querträgers 3 angeordnet ist. Selbstverständlich kann auch lediglich eine Kohlefaserstrukturbatterie 5 an dem Zentralsteg 30 angeordnet sein. Auch ist denkbar, dass eine erste Kohlefaserstrukturbatterie 5 und eine zweite Kohlefaserstrukturbatterie 6jeweils mit der ersten Seitenfläche 30a des Zentralstegs 30 flächig verbunden sind, wie dies in Fig. 7 beispielhaft dargestellt ist. Wie bereits kurz erläutert wurde, kann sich hierbei die zweite Anschlussleiterbahn 34 ausschließlich auf der ersten Oberfläche 31a des Querstegs 31 erstrecken und die optionale dritte Anschlussleiterbahn 37 erstreckt sich zumindest auf der ersten Oberfläche 31a des Querstegs 31. Wie in Fig. 7 beispielhaft dargestellt, kann die zweite Anschlussleiterbahn 34 einen U-förmigen verlauf aufweisen, wobei jeweils zwei Schenkel der Anschlussleiterbahn 34 quer zum Zentralsteg 30 und ein diese Schenkel verbindender weiterer Schenkel entlang der Querträgerlängsrichtung L30 bzw. entlang des Zentralstegs 30 verläuft. Die dritte Leiterbahn 37 kann sich insbesondere auf der ersten Seite des Querträgers 3 auf der ersten Oberfläche 31a, der ersten Kante 31c und der zweiten Oberfläche 31b des Querstegs 31 verlaufen und im Bereich des ersten Endabschnitts 3A des Querträgers 3 auf der zweiten Oberfläche 31b enden, wie dies in Fig. 7 beispielhaft gezeigt ist.

Wie in Fig. 7 weiterhin beispielhaft dargestellt ist, können die erste und die optionale zweite Sammelleiterbahn 21, 22 auch nebeneinander angeordnet sein. Wie in Fig. 7 erkennbar, ist die optionale dritte Anschlussleiterbahn 27, welche im Bereich des ersten Endabschnitts 3A auf der zweiten Oberfläche 31a des Querstegs 31 endet, in Kontakt mit der zweiten Anschlussleiterbahn 22 und damit elektrisch mit dieser verbunden. Der erste Kollektor 53 der ersten Kohlefaserstrukturbatterie 5 ist mit der ersten Anschlussleiterbahn 33, der zweiter Kollektor 54 der ersten Kohlefaserstrukturbatterie 5 ist mit der zweiten Anschlussleiterbahn 34 in Kontakt und damit elektrisch mit dieser verbunden. Ferner ist der erste Kollektor 53 der zweiten Kohlefaserstrukturbatterie 6 mit der zweiten Anschlussleiterbahn 34 in Kontakt und damit mit dieser elektrisch verbunden. Der zweite Kollektor 54 der zweiten Kohlefaserstrukturbatterie 6 mit dem auf der ersten Oberfläche 31a des Querstegs 31 verlaufenden Abschnitt der dritten Anschlussleiterbahn 37 in Kontakt und damit mit dieser elektrisch verbunden.

Wie in Fig. 8 beispielhaft gezeigt ist, können eine erste und eine zweite Kohlefaserstrukturbatterie 5, 6 flächig mit der ersten Seitenfläche 30a des Zentralstegs 3 und eine dritte Kohlefaserstrukturbatterie 7 und eine vierte Kohlefaserstrukturbatterie 8 flächig mit der zweiten Seitenfläche 30a des Zentralstegs 3 verbunden sein. Im Unterschied zu Fig. 7 verläuft die dritte Anschlussleiterbahn 37 in Fig. 8 ununterbrochen auf der ersten Seite des Querträgers 3 auf der ersten Oberfläche 31a des Querstegs 31, auf der ersten Kante 31c, auf der zweiten Oberfläche 31b des Querstegs 31, auf der zweiten Kante 31d und auf der zweiten Seite des Querträgers 3 auf der ersten Oberfläche 31a des Querstegs 31.

Ferner kann eine optionale vierte Anschlussleiterbahn 38 vorgesehen sein, welche zumindest auf der ersten Oberfläche 31a des Querstegs 31 verläuft. Wie in Fig. 8 beispielhaft dargestellt ist, kann vorgesehen sein, dass die vierte Anschlussleiterbahn 38 auf der zweiten Seite des Querträgers ausschließlich auf der ersten Oberfläche 31a des Querstegs 31 verläuft, beispielsweise U-förmig wie dies in Fig. 8 schematisch dargestellt ist. Eine weiter optionale fünfte Anschlussleiterbahn 39 kann im Bereich des ersten Endabschnitts 3A des Querstegs vorgesehen sein. Wie in Fig. 8 beispielhaft dargestellt, kann sich die fünfte Anschlussleiterbahn 39 beispielsweise auf der zweiten Seite des Querstegs 31 auf der ersten Oberfläche 31a, auf der zweiten Kante 31d und auf der zweiten Oberfläche 31b des Querstegs 31 erstrecken und auf der zweiten Oberfläche 31b enden. Wie in Fig. 8 beispielhaft dargestellt, kann die fünfte Anschlussleiterbahn 39 beispielsweise in Bezug auf den Zentralsteg 30 spiegelsymmetrisch zu der ersten Anschlussleiterbahn 33 angeordnet und positioniert sein.

In Fig. 8 sind die Sammelleiterbahnen 21, 22 genauso angeordnet wie in der in Fig. 3 gezeigten Leichtbaustruktur 1. Die fünfte Anschlussleiterbahn 39 ist in Kontakt mit der zweiten Sammelleiterbahn 22 und damit elektrisch mit dieser verbunden.

Wie in Fig. 8 beispielhaft dargestellt ist, kann ein erster Kollektor 53 der dritten Batterie 7 mit dem Abschnitt der dritten Anschlussleiterbahn 37, der auf der zweiten Seite des Querträgers 3 auf der ersten Oberfläche 31a des Querstegs 31 verläuft, in Kontakt und damit elektrisch verbunden sein. Der zweite Kollektor 54 der dritten Batterie 7 kann mit der vierten Anschlussleiterbahn 38 in Kontakt und damit elektrisch verbunden sein. Ferner kann ein erster Kollektor 53 der vierten Batterie 8 mit der vierten Anschlussleiterbahn 38 in Kontakt und damit elektrisch verbunden sein. Ein zweiter Kollektor 54 der vierten Batterie 8 kann mit der fünften Anschlussleiterbahn 39 in Kontakt und damit elektrisch verbunden sein. Optional sind damit alle vier Kohlefaserstrukturbatterien 5-8 elektrisch in Reihe geschaltet, wie dies in Fig. 8 beispielhaft gezeigt ist. Es ist jedoch auch denkbar, die erste und die zweite Kohlefaserstrukturbatterie 5, 6 in Reihe zu schalten, wie in Fig. 7 beispielhaft gezeigt ist und die dritte und die vierte Kohlefaserstrukturbatterie 6, 7 in gleicher Weise in Reihe und ihrerseits parallel zu den in Reihe geschalteten ersten und zweiten Kohlefaserstrukturbatterien 5, 6 zu schalten.

Ganz allgemein kann somit vorgesehen sein dass die Leichtbaustruktur zumindest eine weitere Kohlefaserstrukturbatterie 6, 7, 8 aufweist, welche flächig mit dem Zentralsteg 30 des Querträgers 3 verbunden ist, wobei der erste Kollektor 53 der weiteren Kohlefaserstrukturbatterie 6, 7, 8 elektrisch mit der zweiten Anschlussleiterbahn 34 verbunden ist und der zweite Kollektor 54 der weiteren Kohlefaserstrukturbatterie 6, 7, 8 elektrisch mit einer weiteren Anschlussleiterbahn 37 aus einem elektrisch leitenden Material verbunden ist, welche zumindest auf der ersten Oberfläche 31a des Querstegs 31 des Querträgers 3 verläuft.

Fig. 9 zeigt beispielhaft eine weitere Leichtbaustruktur 1, welche sich von der in Fig. 3 gezeigten Leichtbaustruktur 1 in der Anordnung der Sammelleiterbahnen 21, 22 und im Verlauf der zweiten Anschlussleiterbahn 34 unterscheidet. Ferner weist die in Fig. 9 beispielhaft gezeigte Leichtbaustruktur 1 zusätzlich eine vierte Anschlussleiterbahn 38 auf.

Wie in Fig. 9 beispielhaft dargestellt, kann sich die zweite Anschlussleiterbahn 34 zusätzlich auf der zweiten Oberfläche 31b des Querstegs 31 erstrecken, insbesondere auf der zweiten Seite des Querträgers 3 und im Bereich des ersten Endabschnitts 3A des Querträgers 3 auf der zweiten Oberfläche 31b des Querstegs 31 enden. Wie in Fig. 7 ist auch in Fig. 9 beispielhaft gezeigt, dass die erste und die zweite Sammelleiterbahn 21, 22 nebeneinander verlaufen können. Die zweite Anschlussleiterbahn 34 ist mit der zweiten Sammelleiterbahn 22 in Kontakt und dadurch mit dieser elektrisch verbunden.

Bei der in Fig. 9 beispielhaft gezeigten Leichtbaustruktur 1 erstreckt sich die dritte Anschlussleiterbahn 37 im Bereich des ersten Endabschnitts 3A auf der zweiten Seite des Querstegs 3 auf der ersten Oberfläche 31a des Querstegs 31 und endet auf der zweiten Oberfläche 31b des Querstegs 31. Die dritte Anschlussleiterbahn 37 ist mit der ersten Sammelleiterbahn 21 in Kontakt und elektrisch mit dieser verbunden. Insbesondere kann die dritte Anschlussleiterbahn 37 in gleicher Weise verlaufen wie die in Fig. 3 bzw. Fig. 4.

Die optionale in der vierte Anschlussleiterbahn 38 ist aus einem elektrisch leitenden Material gebildet und erstreckt sich beabstandet von der dritten Anschlussleiterbahn 37 auf der ersten Oberfläche 31a des Querstegs 31, endet im Bereich des ersten Endabschnitts 3A des Querträgers 3 auf der zweiten Oberfläche 31b des Querstegs 31 und ist mit der zweiten Sammelleiterbahn in Kontakt und somit mit dieser elektrisch verbunden. Insbesondere kann die vierte Anschlussleiterbahn 38 in gleicher Weise verlaufen, wie die zweite Anschlussleiterbahn 34, jedoch auf der zweiten Seite des Querträgers 3.

Wie in Fig. 9 weiterhin dargestellt, kann der erste Kollektor 53 der zweiten Kohlefaserstrukturbatterie 6 elektrisch mit einer dritten Anschlussleiterbahn 37 und der zweite Kollektor 54 der weiteren Kohlefaserstrukturbatterie 6 elektrisch mit der vierten Anschlussleiterbahn 38 elektrisch verbunden sein. Damit wird eine Parallelschaltung der ersten und der zweiten Batterie 5, 6 realisiert.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### Bezugszeichenliste

- 1: Leichtbaustruktur
- 2: erster Längsträger
- 3: Querträger
- 3A: erster Endabschnitt des Querträgers
- 3B: zweiter Endabschnitt des Querträgers
- 4: zweiter Längsträger
- 5: Kohlefaserstrukturbatterie
- 6, 7, 8: Kohlefaserstrukturbatterien

- 20: erster Basissteg des ersten Längsträgers
- 20a: Kontaktoberfläche
- 21: erste Sammelleiterbahn
- 22: zweite Sammelleiterbahn
- 23: Hauptsteg des ersten Längsträgers
- 24: zweiter Basissteg des ersten Längsträgers
- 30: Zentralsteg des Querträgers
- 31: erster Quersteg
- 31a: erste Oberfläche des Querstegs
- 31b: zweite Oberfläche des Querstegs
- 31c: erste Kante
- 31d: zweite Kante
- 32: zweiter Quersteg
- 33: erste Anschlussleiterbahn
- 34: zweite Anschlussleiterbahn
- 35, 36: Vertiefung
- 37: dritte Anschlussleiterbahn
- 38: vierte Anschlussleiterbahn
- 39: fünfte Anschlussleiterbahn
- 40: erster Basissteg des zweiten Längsträgers
- 43: Hauptsteg des zweiten Längsträgers
- 44: zweiter Basissteg des zweiten Längsträgers
- 50: Separatorschicht
- 51: Kathodenschicht
- 52: Anodenschicht
- 53: erster Kollektor
- 54: zweiter Kollektor
- 55: Hülle
- 56: Polymermatrixmaterial
- 100: Luftfahrzeug
- 101: Rumpf
- 102: Flügel
- 103: Seitenleitwerk
- 104: Höhenleitwerk
- 112: Flügellängsholm
- 113: Rippe
- 114: Flügellängsholm
- L30: Querträgerlängsrichtung
- L102: Flügellängsrichtung
- T102: Flügeltiefenrichtung

## Patentansprüche

1. Leichtbaustruktur (1) für ein Fahrzeug, insbesondere ein Luftfahrzeug (100), mit:
einem Querträger (3) mit einem Zentralsteg (30) und einem sich quer zu dem Zentralsteg (30) erstreckenden Quersteg (31);
einer Kohlefaserstrukturbatterie (5) mit einer Kathodenschicht (51), einem mit der Kathodenschicht (51) verbundenen ersten Kollektor (53), einer Anodenschicht (52), einem mit der Anodenschicht (52) verbundenen zweiten Kollektor (54) und einer zwischen der Anodenschicht (52) und der Kathodenschicht (51) angeordneten Separatorschicht (50), wobei die Kohlefaserstrukturbatterie (5) flächig mit dem Zentralsteg (30) des Querträgers (3) verbunden ist, **dadurch gekennzeichnet, dass** die Leichtbaustruktur (1) ferner aufweist:
einen ersten Längsträger (2) mit einem Basissteg (20), welcher an einer Kontaktoberfläche (20a) eine erste Sammelleiterbahn (21) aus einem elektrisch leitfähigen Material aufweist,
wobei der Quersteg (31) des Querträgers (3) eine erste Anschlussleiterbahn (33) aus einem elektrisch leitfähigen Material, die sich im Bereich eines ersten Endabschnitts (3A) des Querträgers (3) auf einer ersten Oberfläche (31a) und einer entgegengesetzt zu dieser orientierten zweiten Oberfläche (31b) des Querstegs (31) erstreckt, und eine zweite Anschlussleiterbahn (34) aus einem elektrisch leitfähigen Material aufweist, welche sich separat von der ersten Anschlussleiterbahn (33) zumindest auf der ersten Oberfläche (31a) des Querstegs (31) erstreckt,
wobei sich der Querträger (3) quer zu dem Längsträger (2) erstreckt und der Quersteg (31) des Querträgers (3) am ersten Endabschnitt (3A) mit dem Basissteg (20) des ersten Längsträgers (2) derart verbunden ist, dass die erste Anschlussleiterbahn (33) in Kontakt mit der ersten Sammelleiterbahn (21) des Basisstegs (20) des ersten Längsträgers (2) ist,
wobei der erste Kollektor (53) der Kohlefaserstrukturbatterie (5) elektrisch mit der ersten oder der zweiten Anschlussleiterbahn (33; 34) verbunden ist und der zweite Kollektor (54) elektrisch mit der jeweils anderen Anschlussleiterbahn (34; 33) verbunden ist.

2. Leichtbaustruktur (1) nach Anspruch 1, wobei die Kohlefaserstrukturbatterie (5) einen rechteckförmigen Querschnitt aufweist.

3. Leichtbaustruktur (1) nach Anspruch 1 oder 2, wobei die Kohlefaserstrukturbatterie (5) mit dem Zentralsteg (30) des Querträgers (3) verklebt oder verschweißt ist.

4. Leichtbaustruktur (1) nach einem der voranstehenden Ansprüche, wobei der Zentralsteg (30) des Querträgers (3) eine Vertiefung (35; 36) aufweist, in welcher die Kohlefaserstrukturbatterie (5) aufgenommen ist.

5. Leichtbaustruktur (1) nach einem der voranstehenden Ansprüche, zusätzlich aufweistend:
zumindest eine weitere Kohlefaserstrukturbatterie (6; 7; 8) mit einer Kathodenschicht (51), einem mit der Kathodenschicht (51) verbundenen ersten Kollektor (53), einer Anodenschicht (52), einem mit der Anodenschicht (52) verbundenen zweiten Kollektor (54) und einer zwischen der Anodenschicht (52) und der Kathodenschicht (51) angeordneten Separatorschicht (50), wobei die weitere Kohlefaserstrukturbatterie (6; 7; 8) flächig mit dem Zentralsteg (30) des Querträgers (3) verbunden ist, und
wobei der erste Kollektor (53) der weiteren Kohlefaserstrukturbatterie (6; 7; 8) elektrisch mit der zweiten Anschlussleiterbahn (34) verbunden ist und der zweite Kollektor (54) der weiteren Kohlefaserstrukturbatterie (6; 7; 8) elektrisch mit einer weiteren Anschlussleiterbahn (37) aus einem elektrisch leitenden Material verbunden ist, welche zumindest auf der ersten Oberfläche (31a) des Querstegs (31) des Querträgers (3) verläuft.

6. Leichtbaustruktur (1) nach Anspruch 5, wobei der Quersteg (31) über eine erste Seitenfläche (30a) des Zentralstegs (30) und über eine entgegengesetzt zu der ersten Seitenfläche (30a) gelegene zweite Seitenfläche (30b) des Zentralstegs (30) vorsteht,
wobei die erste Anschlussleiterbahn (33) sich auf einer durch die erste Seitenfläche (30a) des Zentralstegs (30) definierten ersten Seite des Querträgers (3) auf der ersten Oberfläche (31a) des Querstegs (31) erstreckt und auf der zweiten Oberfläche (31b) des Querstegs (31) endet,
wobei die zweite Anschlussleiterbahn (34) sich auf der ersten Seite des Querträgers (3) auf der ersten Oberfläche (31a) des Querstegs (31), auf der zweiten Oberfläche (31b) des Querstegs (31) und auf einer durch die zweite Seitenfläche (30b) des Zentralstegs (30) definierte zweite Seite des Querträgers (3) auf der ersten Oberfläche (31a) des Querstegs (31) erstreckt, wobei der Quersteg (31) zusätzlich eine dritte Anschlussleiterbahn (37) aus einem elektrisch leitenden Material aufweist, welche sich im Bereich des ersten Endabschnitts (3A) auf der zweiten Seite des Querträgers (3) auf der ersten Oberfläche (31a) des Querstegs (31) erstreckt und auf der zweiten Oberfläche (31b) des Querstegs (31) endet, wobei die dritte Anschlussleiterbahn (37) mit einer an der Kontaktoberfläche (20a) des Basisstegs (20) vorgesehenen zweiten Sammelleiterbahn (21) aus einem elektrisch leitenden Material in Kontakt ist,
wobei eine erste Kohlefaserstrukturbatterie (5) mit der ersten Seitenfläche (30a) des Zentralstegs (30) flächig verbunden ist und eine zweite Kohlefaserstrukturbatterie (6) mit der zweiten Seitenfläche (30b) des Zentralstegs (30) flächig verbunden ist, und
wobei ein erster Kollektor (53) der ersten Kohlefaserstrukturbatterie (5) mit der ersten Anschlussleiterbahn (33), ein zweiter Kollektor (54) der ersten Kohlefaserstrukturbatterie (5) mit der zweiten Anschlussleiterbahn (34), ein erster Kollektor (53) der zweiten Kohlefaserstrukturbatterie (6) mit der zweiten Anschlussleiterbahn (34) und ein zweiter Kollektor (54) der zweiten Kohlefaserstrukturbatterie (6) mit der dritten Anschlussleiterbahn (37) elektrisch verbunden ist.

7. Leichtbaustruktur (1) nach Anspruch 5, wobei der Quersteg (31) zumindest über eine erste Seitenfläche (30a) des Zentralstegs (30) vorsteht,
wobei die erste Anschlussleiterbahn (33) sich auf der ersten Oberfläche (31a) des Querstegs (31) erstreckt und auf der zweiten Oberfläche (31b) des Querstegs (31) endet,
wobei die zweite Anschlussleiterbahn (34) sich ausschließlich auf der ersten Oberfläche (31a) des Querstegs (31) erstreckt,
wobei der Quersteg (31) zusätzlich eine dritte Anschlussleiterbahn (37) aus einem elektrisch leitenden Material aufweist, welche sich zumindest auf der ersten Oberfläche (31a) des Querstegs (31) erstreckt,
wobei eine erste Kohlefaserstrukturbatterie (5) und eine zweite Kohlefaserstrukturbatterie (6) jeweils mit der ersten Seitenfläche (30a) des Zentralstegs (30) flächig verbunden sind, und
wobei ein erster Kollektor (53) der ersten Kohlefaserstrukturbatterie (5) mit der ersten Anschlussleiterbahn (33), ein zweiter Kollektor (54) der ersten Kohlefaserstrukturbatterie (5) mit der zweiten Anschlussleiterbahn (34), ein erster Kollektor (53) der zweiten Kohlefaserstrukturbatterie (6) mit der zweiten Anschlussleiterbahn (34) und ein zweiter Kollektor (54) der zweiten Kohlefaserstrukturbatterie (6) mit der dritten Anschlussleiterbahn (37) elektrisch verbunden ist.

8. Leichtbaustruktur (1) nach Anspruch 7, wobei die dritte Anschlussleiterbahn (37) sich zusätzlich auf der zweiten Oberfläche (31b) des Querstegs (31) erstreckt und im Bereich des ersten Endabschnitts (3A) des Querträgers (3) auf der zweiten Oberfläche (31b) des Querstegs (31) endet, und wobei die dritte Anschlussleiterbahn (37) mit einer an der Kontaktoberfläche (20a) des Basisstegs (20) vorgesehenen, von der ersten Sammelleiterbahn (21) elektrisch isolierten zweiten Sammelleiterbahn (22) aus einem elektrisch leitenden Material in Kontakt ist.

9. Leichtbaustruktur (1) nach Anspruch 7, wobei der Quersteg (31) über die erste Seitenfläche (30a) des Zentralstegs (30) und über eine entgegengesetzt zu der ersten Seitenfläche (30a) gelegene zweite Seitenfläche (30b) des Zentralstegs (30) vorsteht, wobei die dritte Anschlussleiterbahn (37) sich auf einer durch die erste Seitenfläche (30a) des Zentralstegs (30) definierten ersten Seite des Querträgers (3) auf der ersten Oberfläche (31a) des Querstegs (31), der zweiten Oberfläche (31b) des Querstegs (31) und auf einer durch die zweite Seitenfläche (30b) des Zentralstegs (30) definierten zweiten Seite des Querträgers (3) auf der ersten Oberfläche (31a) des Querstegs (31) erstreckt.

10. Leichtbaustruktur (1) nach einem der Ansprüche 1 bis 4, zusätzlich aufweisend:
eine weitere Kohlefaserstrukturbatterie (6; 7; 8) mit einer Kathodenschicht (51), einem mit der Kathodenschicht (51) verbundenen ersten Kollektor (53), einer Anodenschicht (52), einem mit der Anodenschicht (52) verbundenen zweiten Kollektor (54) und einer zwischen der Anodenschicht (52) und der Kathodenschicht (51) angeordneten Separatorschicht (50), wobei die weitere Kohlefaserstrukturbatterie (6; 7; 8) flächig mit dem Zentralsteg (30) des Querträgers (3) verbunden ist,
wobei die zweite Anschlussleiterbahn (34) sich zusätzlich auf der zweiten Oberfläche (31b) des Querstegs (31) erstreckt, im Bereich des ersten Endabschnitts (3A) des Querträgers (3) auf der zweiten Oberfläche (31b) des Querstegs (31) endet und mit einer an der Kontaktoberfläche (20a) des Basisstegs (20) vorgesehenen, von der ersten Sammelleiterbahn (21) elektrisch isolierten zweiten Sammelleiterbahn (22) aus einem elektrisch leitenden Material in Kontakt ist,
wobei der Quersteg (31) des Querträgers (30) eine dritte Anschlussleiterbahn (37) aus einem elektrisch leitenden Material aufweist, welche sich im ersten Endabschnitt (3A) auf der ersten Oberfläche (31a) des Querstegs (31) erstreckt, auf der zweiten Oberfläche (31b) des Querstegs (31) endet und mit der ersten Sammelleiterbahn (21) in Kontakt ist, wobei der Quersteg (31) des Querträgers (30) eine vierte Anschlussleiterbahn (38) aus einem elektrisch leitenden Material aufweist,
welche sich beabstandet von der dritten Anschlussleiterbahn (37) auf der ersten Oberfläche (31a) des Querstegs (31) erstreckt, im Bereich des ersten Endabschnitts (3A) des Querträgers (3) auf der zweiten Oberfläche (31b) des Querstegs (31) endet und mit der zweiten Sammelleiterbahn (22) in Kontakt ist,
wobei der erste Kollektor (53) der weiteren Kohlefaserstrukturbatterie (6; 7; 8) elektrisch mit einer dritten Anschlussleiterbahn (37) elektrisch verbunden ist und der zweite Kollektor (54) der weiteren Kohlefaserstrukturbatterie (6; 7; 8) elektrisch mit der vierten Anschlussleiterbahn (38) elektrisch verbunden ist.

11. Leichtbaustruktur (1) nach einem der voranstehenden Ansprüche, zusätzlich aufweisend:
einen zweiten Längsträger (4), welcher sich beabstandet zu und entlang des ersten Längsträgers (2) erstreckt, wobei der Querträger (3) mit einem entgegengesetzt zu dem ersten Endabschnitt (3A) gelegenen zweiten Endabschnitt (3B) mit dem zweiten Längsträger (4) verbunden ist.

12. Leichtbaustruktur (1) nach einem der voranstehenden Ansprüche, wobei der Querträger (3) einen weiteren, sich quer zu dem Zentralsteg (30) erstreckenden Quersteg (32) aufweist, wobei die Querstege (31; 32) an entgegengesetzten Enden des Zentralstegs (30) angeordnet sind, so dass der Zentralsteg (30) und die Querstege (31; 32) einen H-förmigen, einen Z-förmigen oder einen U-förmigen Querschnitt des Querträgers (3) definieren.

13. Luftfahrzeug (100) mit einer Leichtbaustruktur (1) nach einem der voranstehenden Ansprüche.

14. Luftfahrzeug (100) nach Anspruch 13, wobei der erste Längsträger (2) sich in einer Flügellängsrichtung (L102) eines Flügels (102) des Luftfahrzeugs erstreckt und einen ersten Flügellängsholm (112) bildet, und wobei der Querträger (3) sich in einer Flügeltiefenrichtung (T102) erstreckt und eine Rippe (113) des Flügels (102) bildet.

## Claims

1. Lightweight structure (1) for a vehicle, in particular an aircraft (100), comprising:
a transverse member (3) having a central web (30) and a transverse web (31) extending transversely with respect to the central web (30);
a carbon fibre structural battery (5) having a cathode layer (51), a first collector (53) connected to the cathode layer (51), an anode layer (52), a second collector (54) connected to the anode layer (52), and a separator layer (50) arranged between the anode layer (52) and the cathode layer (51), wherein the carbon fibre structural battery (5) is connected to the central web (30) of the transverse member (3) in an areal manner, **characterized in that** the lightweight structure (1) further comprises:
a first longitudinal member (2) having a base web (20) which has, on a contact surface (20a), a first collecting conductor track (21) composed of an electrically conductive material,
wherein the transverse web (31) of the transverse member (3) has a first connecting conductor track (33) composed of an electrically conductive material which extends in the region of a first end portion (3A) of the transverse member (3) on a first surface (31a) and a second surface (31b), which is oriented opposite to said first surface, of the transverse web (31), and a second connecting conductor track (34) composed of an electrically conductive material which extends separately from the first connecting conductor track (33) at least on the first surface (31a) of the transverse web (31),
wherein the transverse member (3) extends transversely with respect to the longitudinal member (2) and the transverse web (31) of the transverse member (3) is connected, at the first end portion (3A), to the base web (20) of the first longitudinal member (2) in such a way that the first connecting conductor track (33) is in contact with the first collecting conductor track (21) of the base web (20) of the first longitudinal member (2),
wherein the first collector (53) of the carbon fibre structural battery (5) is electrically connected to the first or the second connecting conductor track (33; 34) and the second collector (54) is electrically connected to the respectively other connecting conductor track (34; 33).

2. Lightweight structure (1) according to Claim 1, wherein the carbon fibre structural battery (5) has a rectangular cross section.

3. Lightweight structure (1) according to Claim 1 or 2, wherein the carbon fibre structural battery (5) is adhesively bonded or welded to the central web (30) of the transverse member (3).

4. Lightweight structure (1) according to one of the preceding claims, wherein the central web (30) of the transverse member (3) has a recess (35; 36) in which the carbon fibre structural battery (5) is accommodated.

5. Lightweight structure (1) according to one of the preceding claims, additionally comprising:
at least one further carbon fibre structural battery (6; 7; 8) having a cathode layer (51), a first collector (53) connected to the cathode layer (51), an anode layer (52), a second collector (54) connected to the anode layer (52), and a separator layer (50) arranged between the anode layer (52) and the cathode layer (51), wherein the further carbon fibre structural battery (6; 7; 8) is connected to the central web (30) of the transverse member (3) in an areal manner, and wherein the first collector (53) of the further carbon fibre structural battery (6; 7; 8) is electrically connected to the second connecting conductor track (34) and the second collector (54) of the further carbon fibre structural battery (6; 7; 8) is electrically connected to a further connecting conductor track (37) composed of an electrically conducting material which runs at least on the first surface (31a) of the transverse web (31) of the transverse member (3) .

6. Lightweight structure (1) according to Claim 5, wherein the transverse web (31) protrudes beyond a first side surface (30a) of the central web (30) and beyond a second side surface (30b) of the central web (30), said second side surface being situated opposite to the first side surface (30a),
wherein the first connecting conductor track (33) extends on a first side, which is defined by the first side surface (30a) of the central web (30), of the transverse member (3) on the first surface (31a) of the transverse web (31) and ends on the second surface (31b) of the transverse web (31), wherein the second connecting conductor track (34) extends on the first side of the transverse member (3) on the first surface (31a) of the transverse web (31), on the second surface (31b) of the transverse web (31) and on a second side, which is defined by the second side surface (30b) of the central web (30), of the transverse member (3) on the first surface (31a) of the transverse web (31),
wherein the transverse web (31) additionally has a third connecting conductor track (37) composed of an electrically conducting material which extends in the region of the first end portion (3A) on the second side of the transverse member (3) on the first surface (31a) of the transverse web (31) and which ends on the second surface (31b) of the transverse web (31), wherein the third connecting conductor track (37) is in contact with a second collecting conductor track (21) which is provided on the contact surface (20a) of the base web (20) and which is composed of an electrically conducting material,
wherein a first carbon fibre structural battery (5) is connected to the first side surface (30a) of the central web (30) in an areal manner and a second carbon fibre structural battery (6) is connected to the second side surface (30b) of the central web (30) in an areal manner, and
wherein a first collector (53) of the first carbon fibre structural battery (5) is electrically connected to the first connecting conductor track (33), a second collector (54) of the first carbon fibre structural battery (5) is electrically connected to the second connecting conductor track (34), a first collector (53) of the second carbon fibre structural battery (6) is electrically connected to the second connecting conductor track (34), and a second collector (54) of the second carbon fibre structural battery (6) is electrically connected to the third connecting conductor track (37) .

7. Lightweight structure (1) according to Claim 5, wherein the transverse web (31) protrudes at least beyond a first side surface (30a) of the central web (30),
wherein the first connecting conductor track (33) extends on the first surface (31a) of the transverse web (31) and ends on the second surface (31b) of the transverse web (31),
wherein the second connecting conductor track (34) extends exclusively on the first surface (31a) of the transverse web (31),
wherein the transverse web (31) additionally has a third connecting conductor track (37) composed of an electrically conducting material which extends at least on the first surface (31a) of the transverse web (31),
wherein a first carbon fibre structural battery (5) and a second carbon fibre structural battery (6) are each connected to the first side surface (30a) of the central web (30) in an areal manner, and wherein a first collector (53) of the first carbon fibre structural battery (5) is electrically connected to the first connecting conductor track (33), a second collector (54) of the first carbon fibre structural battery (5) is electrically connected to the second connecting conductor track (34), a first collector (53) of the second carbon fibre structural battery (6) is electrically connected to the second connecting conductor track (34), and a second collector (54) of the second carbon fibre structural battery (6) is electrically connected to the third connecting conductor track (37) .

8. Lightweight structure (1) according to Claim 7, wherein the third connecting conductor track (37) additionally extends on the second surface (31b) of the transverse web (31) and ends in the region of the first end portion (3A) of the transverse member (3) on the second surface (31b) of the transverse web (31), and wherein the third connecting conductor track (37) is in contact with a second collecting conductor track (22) which is provided on the contact surface (20a) of the base web (20), which is electrically insulated from the first collecting conductor track (21) and which is composed of an electrically conducting material.

9. Lightweight structure (1) according to Claim 7, wherein the transverse web (31) protrudes beyond the first side surface (30a) of the central web (30) and beyond a second side surface (30b) of the central web (30), said second side surface being situated opposite to the first side surface (30a), wherein the third connecting conductor track (37) extends on a first side, which is defined by the first side surface (30a) of the central web (30), of the transverse member (3) on the first surface (31a) of the transverse web (31), the second surface (31b) of the transverse web (31) and on a second side, which is defined by the second side surface (30b) of the central web (30), of the transverse member (3) on the first surface (31a) of the transverse web (31) .

10. Lightweight structure (1) according to one of Claims 1 to 4, additionally comprising:
a further carbon fibre structural battery (6; 7; 8) having a cathode layer (51), a first collector (53) connected to the cathode layer (51), an anode layer (52), a second collector (54) connected to the anode layer (52), and a separator layer (50) arranged between the anode layer (52) and the cathode layer (51), wherein the further carbon fibre structural battery (6; 7; 8) is connected to the central web (30) of the transverse member (3) in an areal manner,
wherein the second connecting conductor track (34) additionally extends on the second surface (31b) of the transverse web (31), ends in the region of the first end portion (3A) of the transverse member (3) on the second surface (31b) of the transverse web (31) and is in contact with a second collecting conductor track (22) which is provided on the contact surface (20a) of the base web (20), which is electrically insulated from the first collecting conductor track (21) and which is composed of an electrically conducting material,
wherein the transverse web (31) of the transverse member (30) has a third connecting conductor track (37) composed of an electrically conducting material which extends in the first end portion (3A) on the first surface (31a) of the transverse web (31), which ends on the second surface (31b) of the transverse web (31) and which is in contact with the first collecting conductor track (21),
wherein the transverse web (31) of the transverse member (30) has a fourth connecting conductor track (38) composed of an electrically conducting material which extends spaced apart from the third connecting conductor track (37) on the first surface (31a) of the transverse web (31), which ends in the region of the first end portion (3A) of the transverse member (3) on the second surface (31b) of the transverse web (31) and which is in contact with the second collecting conductor track (22),
wherein the first collector (53) of the further carbon fibre structural battery (6; 7; 8) is electrically electrically connected to a third connecting conductor track (37) and the second collector (54) of the further carbon fibre structural battery (6; 7; 8) is electrically electrically connected to the fourth connecting conductor track (38).

11. Lightweight structure (1) according to one of the preceding claims, additionally comprising:
a second longitudinal member (4) which extends spaced apart from and along the first longitudinal member (2), wherein the transverse member (3) is connected to the second longitudinal member (4) at a second end portion (3B) situated opposite to the first end portion (3A).

12. Lightweight structure (1) according to one of the preceding claims, wherein the transverse member (3) has a further transverse web (32) extending transversely with respect to the central web (30), wherein the transverse webs (31; 32) are arranged at opposite ends of the central web (30), such that the central web (30) and the transverse webs (31; 32) define an H-shaped, a Z-shaped or a U-shaped cross section of the transverse member (3).

13. Aircraft (100) comprising a lightweight structure (1) according to one of the preceding claims.

14. Aircraft (100) according to Claim 13, wherein the first longitudinal member (2) extends in a wing longitudinal direction (L102) of a wing (102) of the aircraft and forms a first longitudinal wing spar (112), and wherein the transverse member (3) extends in a wing depth direction (T102) and forms a rib (113) of the wing (102).

## Revendications

1. Structure légère (1) destinée à un véhicule, notamment un aéronef (100), ladite structure légèrement comprenant :
une poutrelle transversale (31) pourvue d'une aile centrale (30) et d'une aile transversale (31) qui s'étend transversalement à l'aile centrale (30) ;
une batterie à structure en fibres de carbone (5) comprenant une couche cathodique (51), un premier collecteur (53) relié à la couche cathodique (51), une couche anodique (52), un deuxième collecteur (54) relié à la couche anodique (52), et une couche séparatrice (50) disposée entre la couche anodique (52) et la couche cathodique (51), la batterie à structure en fibres de carbone (5) étant reliée de manière sensiblement bidimensionnelle à l'aile centrale (30) de la poutrelle transversale (3), **caractérisée en ce que** la structure légère (1) comporte en outre :
une première poutrelle longitudinale (2) pourvue d'une aile de base (20) qui comporte une première piste conductrice collectrice (21) en un matériau électriquement conducteur sur une surface de contact (20a),
l'aile transversale (31) de la poutrelle transversale (3) comportant une première piste conductrice de raccordement (33) en un matériau électriquement conducteur, qui s'étend dans la zone d'une première portion d'extrémité (3A) de la poutrelle transversale (3) sur une première surface (31a) et une deuxième surface (31b), dirigée à l'opposé de celle-ci, de l'aile transversale (31), et une deuxième piste conductrice de raccordement (34) en un matériau électriquement conducteur, qui s'étend séparément de la première piste conductrice de raccordement (33) au moins sur la première surface (31a) de l'aile transversale (31),
la poutrelle transversale (3) s'étendant transversalement à la poutrelle longitudinale (2) et l'aile transversale (31) de la poutrelle transversale (3) étant reliée au niveau de la première portion d'extrémité (3A) à l'aile de base (20) de la première poutrelle longitudinale (2) de manière à ce que la première piste conductrice de raccordement (33) soit en contact avec la première piste conductrice collectrice (21) de l'aile de base (20) de la première poutrelle longitudinale (2),
le premier collecteur (53) de la batterie à structure en fibres de carbone (5) étant relié électriquement à la première ou à la deuxième piste conductrice de raccordement (33 ; 34) et le deuxième collecteur (54) étant relié électriquement à l'autre piste conductrice de raccordement respective (34 ; 33).

2. Structure légère (1) selon la revendication 1, la batterie à structure en fibres de carbone (5) ayant une section transversale rectangulaire.

3. Structure légère (1) selon la revendication 1 ou 2, la batterie à structure en fibres de carbone (5) étant collée ou soudée à l'aile centrale (30) de la poutrelle transversale (3).

4. Structure légère (1) selon l'une des revendications précédentes, l'aile centrale (30) de la poutrelle transversale (3) comportant un évidement (35 ; 36) dans lequel la batterie à structure en fibres de carbone (5) est logée.

5. Structure légère (1) selon l'une des revendications précédentes, comportant en plus :
au moins une autre batterie à structure en fibres de carbone (6 ; 7 ; 8) comprenant une couche cathodique (51), un premier collecteur (53) relié à la couche cathodique (51), une couche anodique (52), un deuxième collecteur (54) relié à la couche anodique (52) et une couche séparatrice (50) disposée entre la couche anodique (52) et la couche cathodique (51), l'autre batterie à structure en fibres de carbone (6 ; 7 ; 8) étant reliée de manière sensiblement bidimensionnelle à l'aile centrale (30) de la poutrelle transversale (3), et le premier collecteur (53) de l'autre batterie à structure en fibres de carbone (6 ; 7 ; 8) étant relié électriquement à la deuxième piste conductrice de raccordement (34) et le deuxième collecteur (54) de l'autre batterie à structure en fibres de carbone (6 ; 7 ; 8) étant relié électriquement à une autre piste conductrice de raccordement (37) en matériau électriquement conducteur, qui s'étend au moins sur la première surface (31a) de l'aile transversale (31) de la poutrelle transversale (3).

6. Structure légère (1) selon la revendication 5, l'aile transversale (31) faisant saillie d'une première surface latérale (30a) de l'aile centrale (30) et d'une deuxième surface latérale (30b) de l'aile centrale (30) située à l'opposé de la première surface latérale (30a),
la première piste conductrice de raccordement (33) s'étendant sur un premier côté de la poutrelle transversal (3), qui est défini par la première surface latérale (30a) de l'aile centrale (30), sur la première surface (31a) de l'aile transversale (31) et se terminant sur la deuxième surface (31b) de l'aile transversale (31),
la deuxième piste conductrice de raccordement (34) s'étendant sur le premier côté de la poutrelle transversale (3) sur la première surface (31a) de l'aile transversale (31), sur la deuxième surface (31b) de l'aide transversale (31) et sur un deuxième côté de la poutrelle transversale (3), défini par la deuxième surface latérale (30b) de l'aile centrale (30), sur la première surface (31a) de l'aile transversale (31),
l'aile transversale (31) comportant en outre une troisième piste conductrice de raccordement (37) en matériau électriquement conducteur, qui est située dans la région de la première portion d'extrémité (3A) sur le deuxième côté de la poutrelle transversale (3) sur la première surface (31a) de l'aile transversale (31) et qui se termine sur la deuxième surface (31b) de l'aile transversale (31), la troisième piste conductrice de raccordement (37) étant en contact avec une deuxième piste conductrice collectrice (21) en matériau électriquement conducteur qui est prévue sur la surface de contact (20a) de l'aile de base (20),
une première batterie à structure en fibres de carbone (5) étant reliée de manière sensiblement bidimensionnelle à la première surface latérale (30a) de l'aile centrale (30) et une deuxième batterie à structure en fibres de carbone (6) étant reliée de manière sensiblement bidimensionnelle à la deuxième surface latérale (30b) de l'aile centrale (30), et
un premier collecteur (53) de la première batterie à structure en fibres de carbone (5) étant relié électriquement à la première piste conductrice de raccordement (33), un deuxième collecteur (54) de la première batterie à structure en fibres de carbone (5) étant relié électriquement à la deuxième piste conductrice de raccordement (34), un premier collecteur (53) de la deuxième batterie à structure en fibres de carbone (6) étant relié électriquement à la deuxième piste conductrice de raccordement (34) et un deuxième collecteur (54) de la deuxième batterie à structure en fibres de carbone (6) étant relié électriquement à la troisième piste conductrice de raccordement (37).

7. Structure légère (1) selon la revendication 5, l'aile transversale (31) faisant saillie au moins d'une première surface latérale (30a) de l'aile centrale (30),
la première piste conductrice de raccordement (33) s'étendant sur la première surface (31a) de l'aile transversale (31) et se terminant sur la deuxième surface (31b) de l'aile transversale (31),
la deuxième piste conductrice de raccordement (34) s'étendant exclusivement sur la première surface (31a) de l'aile transversale (31),
l'aile transversale (31) comportant en outre une troisième piste conductrice de raccordement (37) en un matériau électriquement conducteur, qui s'étend au moins sur la première surface (31a) de l'aile transversale (31),
une première batterie à structure en fibres de carbone (5) et une deuxième batterie à structure en fibres de carbone (6) étant chacune reliées de manière sensiblement bidimensionnelle à la première surface latérale (30a) de l'aile centrale (30), et
un premier collecteur (53) de la première batterie à structure en fibres de carbone (5) étant relié électriquement à la première piste conductrice de raccordement (33), un deuxième collecteur (54) de la première batterie à structure en fibres de carbone (5) étant relié électriquement à la deuxième piste conductrice de raccordement (34), un premier collecteur (53) de la deuxième batterie à structure en fibres de carbone (6) étant relié électriquement à la deuxième piste conductrice de raccordement (34) et un deuxième collecteur (54) de la deuxième batterie à structure en fibres de carbone (6) étant relié électriquement à la troisième piste conductrice de raccordement (37).

8. Structure légère (1) selon la revendication 7, la troisième piste conductrice de raccordement (37) s'étendant en plus sur la deuxième surface (31b) de l'aile transversale (31) et se terminant dans la région de la première portion d'extrémité (3A) de la poutrelle transversale (3) sur la deuxième surface (31b) de l'aile transversale (31), et la troisième piste conductrice de raccordement (37) étant en contact avec une deuxième piste conductrice collectrice (22) en matériau électriquement conducteur qui est prévue sur la surface de contact (20a) de l'aile de base (20) et qui est électriquement isolée de la première piste conductrice collectrice (21).

9. Structure légère (1) selon la revendication 7, l'aile transversale (31) faisant saillie de la première surface latérale (30a) de l'aile centrale (30) et d'une deuxième surface latérale (30b) de l'aile centrale (30) située à l'opposé de la première surface latérale (30a), la troisième piste conductrice de raccordement (37) s'étendant sur un premier côté de la poutrelle transversal (3), défini par la première surface latérale (30a) de l'aile centrale (30), sur la première surface (31a) de l'aile transversale (31), la deuxième surface (31b) de la poutrelle transversale (31) et sur un deuxième côté de la poutrelle transversale (3), défini par la deuxième surface latérale (30b) de l'aile centrale (30), sur la première surface (31a) de la poutrelle transversale (31).

10. Structure légère (1) selon l'une des revendications 1 à 4, comportant en outre :
une autre batterie à structure en fibres de carbone (6 ; 7 ; 8) comprenant une couche cathodique (51), un premier collecteur (53) relié à la couche cathodique (51), une couche anodique (52), un deuxième collecteur (54) relié à la couche anodique (52) et une couche séparatrice (50) disposée entre la couche anodique (52) et la couche cathodique (51), l'autre batterie à structure en fibres de carbone (6 ; 7 ; 8) étant reliée de manière sensiblement bidimensionnelle à l'aile centrale (30) de la poutrelle transversale (3),
la deuxième piste conductrice de raccordement (34) s'étendant en plus sur la deuxième surface (31b) de l'aile transversale (31), se terminant dans la région de la première portion d'extrémité (3A) de la poutrelle transversale (3) sur la deuxième surface (31b) de l'aile transversale (31) et étant en contact avec une deuxième piste conductrice collectrice (22) en matériau électriquement conducteur qui est prévue sur la surface de contact (20a) de l'aile de base (20) et qui est électriquement isolé de la première piste conductrice collectrice (21),
l'aile transversale (31) de la poutrelle transversale (30) comportant une troisième piste conductrice de raccordement (37) en matériau électriquement conducteur, qui s'étend dans la première portion d'extrémité (3A) sur la première surface (31a) de l'aile transversale (31), se termine sur la deuxième surface (31b) de l'aile transversale (31) et est en contact avec la première piste conductrice collectrice (21),
l'aile transversale (31) de la poutrelle transversale (30) comportant une quatrième piste conductrice de raccordement (38) en matériau électriquement conducteur, qui s'étend à distance de la troisième piste conductrice de raccordement (37) sur la première surface (31a) de l'aile transversale (31), se termine dans la région de la première section d'extrémité (3A) de la poutrelle transversale (3) sur la deuxième surface (31b) de l'aile transversale (31) et est en contact avec la deuxième piste conductrice collectrice (22),
le premier collecteur (53) de l'autre batterie à structure en fibres de carbone (6 ; 7 ; 8) étant relié électriquement électriquement à une troisième piste conductrice de raccordement (37) et le deuxième collecteur (54) de l'autre batterie à structure en fibres de carbone (6 ; 7 ; 8) étant reliée électriquement électriquement à la quatrième piste conductrice de raccordement (38).

11. Structure légère (1) selon l'une des revendications précédentes, comportant en outre :
une deuxième poutrelle longitudinale (4) qui s'étend à distance le long de la première poutrelle longitudinale (2), la poutrelle transversale (3) étant reliée à la deuxième poutrelle longitudinale (4) par une deuxième portion d'extrémité (3B) située à l'opposé de la première portion d'extrémité (3A).

12. Structure légère (1) selon l'une des revendications précédentes, la poutrelle transversale (3) comportant une aile transversale (32) qui s'étend transversalement à l'aile centrale (30), les ailes transversales (31 ; 32) étant disposées à des extrémités opposées de l'aile centrale (30) de sorte que l'aile centrale (30) et les ailes transversales (31 ; 32) définissent une section transversale de la poutrelle transversale (3) en forme de H, en forme de Z ou en forme de U.

13. Aéronef (100) comprenant une structure légère (1) selon l'une des revendications précédentes.

14. Aéronef (100) selon la revendication 13, la première poutrelle longitudinale (2) s'étendant dans une direction longitudinale (L102) d'une aile (102) de l'aéronef et formant un premier longeron longitudinal d'aile (112), et la poutrelle transversale (3) s'étendant dans une direction de profondeur d'aile (T102) et formant une nervure (113) de l'aile (102).
